# EUROPÄISCHE PATENTSCHRIFT

(11) **EP 3 928 421 B1**
(45) Veröffentlichungstag und Bekanntmachung des Hinweises auf die Patenterteilung: **03.04.2024**
(21) Anmeldenummer: 20705697.9
(22) Anmeldetag: 17.02.2020
(51) Int. Cl.: H02M 1/32, H02H 7/122, H02M 1/36, H02M 7/487

(54) **VERFAHREN ZUM AUSSCHALTEN VON LEISTUNGSHALBLEITERSCHALTERN EINER BRÜCKENSCHALTUNG, BRÜCKENSCHALTUNG UND WECHSELRICHTER UMFASSEND EINE BRÜCKENSCHALTUNG**
METHOD FOR TURNING OFF POWER SEMICONDUCTOR SWITCHES OF A BRIDGE CIRCUIT, BRIDGE CIRCUIT AND INVERTER COMPRISING A BRIDGE CIRCUIT
PROCÉDÉ POUR COUPER LES COMMUTATEURS À SEMI-CONDUCTEURS DE PUISSANCE D'UN CIRCUIT DE PONT, CIRCUIT DE PONT ET ONDULEUR COMPRENANT UN CIRCUIT DE PONT

(30) Priorität: 19.02.2019 DE 102019104145
(43) Veröffentlichungstag der Anmeldung: 29.12.2021
(73) Patentinhaber: SMA Solar Technology AG, 34266 Niestetal (DE)
(72) Erfinder: STICKELMANN, Uwe, 34260 Kaufungen (DE)
(86) Internationale Anmeldenummer: PCT/EP2020/054048
(87) Internationale Veröffentlichungsnummer: WO 2020/169512

(56) Entgegenhaltungen:
- EP-A1- 2 184 844
- CN-A- 109 088 559
- CN-A- 109 327 154
- US-A1- 2011 013 438
- US-B2- 7 508 640
- GLEISSNER MICHAEL ET AL: "Comparison of fault-tolerant multilevel inverters", 2017 19TH EUROPEAN CONFERENCE ON POWER ELECTRONICS AND APPLICATIONS (EPE'17 ECCE EUROPE), JOINTLY OWNED IEEE-PELS AND EPE ASSOCIATION, 11. September 2017 (2017-09-11), XP033250484, DOI: 10.23919/EPE17ECCEEUROPE.2017.8099102 [gefunden am 2017-11-06]
- DANIEL ANDLER ET AL: "Experimental Investigation of the Commutations of a 3L-ANPC Phase Leg Using 4.5-kV 5.5-kA IGCTs", IEEE TRANSACTIONS ON INDUSTRIAL ELECTRONICS, IEEE SERVICE CENTER, PISCATAWAY, NJ, USA, Bd. 60, Nr. 11, 1. November 2013 (2013-11-01), Seiten 4820-4830, XP011514276, ISSN: 0278-0046, DOI: 10.1109/TIE.2012.2227903

## Beschreibung

Die Erfindung betrifft ein Verfahren zum Ausschalten von Leistungshalbleiterschaltern einer Brückenschaltung. Weiterhin betrifft die Erfindung eine Brückenschaltung mit einer Steuereinheit, die zur Ausführung eines solchen Verfahrens eingerichtet ist, sowie einen Wechselrichter umfassend eine solche Brückenschaltung.

Brückenschaltungen finden Anwendung in leistungselektronischen Wandlerschaltungen zum Umwandeln von einer Stromform in eine andere, beispielsweise bei Wechselrichtern zur Umwandlung von Gleichstrom in Wechselstrom. Brückenschaltungen bestehen üblicherweise aus einer Anordnung mehrerer in Reihe und/oder parallel geschalteter Leistungshalbleiterschalter, wobei Verknüpfungspunkte zwischen den Leistungshalbleiterschaltern Anschlüsse der Brückenschaltung bilden. Durch verschiedene Anordnung unterschiedlicher Anzahlen von Leistungshalbleiterschaltern ergibt sich eine Vielzahl unterschiedlicher dem Fachmann bekannter Topologien von Brückenschaltungen.

Zum Umwandeln von einer Stromform in eine andere werden die Leistungshalbleiterschalter der Brückenschaltungen im Betrieb nach bestimmten Schaltmustern ein- und ausgeschaltet. Insbesondere im Fehlerfall, beispielsweise bei Auftreten von Überströmen oder Überspannungen, aber auch bei der regulären Außerbetriebnahme der Wandlerschaltung ist es notwendig, alle Leistungshalbleiterschalter der Brückenschaltung in einen ausgeschalteten Zustand zu überführen, im Fehlerfall sogar möglichst schnell. Dabei ist es naheliegend und nach dem Stand der Technik weit verbreitet, die Ansteuersignale aller Leistungshalbleiterschalter der Brückenschaltung unmittelbar und gleichzeitig in einen Signalzustand zu versetzen, der die Leistungshalbleiterschalter der Brückenschaltung in einen ausgeschalteten Zustand überführt.

Aufgrund von Bauteiltoleranzen, insbesondere jedoch, wenn innerhalb einer Brückenschaltung Leistungshalbleiterschalter unterschiedlicher Technologien, beispielsweise Feldeffekttransistoren und Bipolartransistoren, verwendet werden, kann es vorkommen, dass einzelne Leistungshalbleiterschalter der Brückenschaltung nach einer Ansteuerung zur Überführung in einen ausgeschalteten Zustand schneller in einen ausgeschalteten Zustand überführt werden als andere.

Bei Brückenschaltungen in Multilevel-Topologien werden prinzipbedingt mit verschiedenen Potentialen an Eingangsanschlüssen der Brückenschaltung verknüpfte Spannungspegel an Ausgangsanschlüsse der Brückenschaltung angelegt. Dadurch kann es bei gleichzeitiger Ansteuerung aller Leistungshalbleiterschalter der Brückenschaltung passieren, dass aufgrund der zuvor genannten unterschiedlich schnellen Überführung verschiedener Leistungshalbleiterschalter in einen ausgeschalteten Zustand, in Verbindung mit dann auftretenden Strömen durch in der Brückenschaltung zusätzlich vorhandene Freilaufdioden, an einzelnen Leistungshalbleiterschaltern der Brückenschaltung kurzzeitig höhere Spannungen anliegen als während des normalen Betriebs der Wandlerschaltung. Diese höheren Spannungen können gegebenenfalls zur Zerstörung der einzelnen Leistungshalbleiterschalter der Brückenschaltung führen.

Beispielsweise aus der Druckschrift EP2779345A1 ist eine Brückenschaltung in DreipunktTopologie bekannt, bei der ein erster Gleichspannungsanschluss über eine Reihenschaltung von vier Leistungshalbleiterschaltern mit einem zweiten Gleichspannungsanschluss verbunden ist und bei der der Verknüpfungspunkt zwischen dem zweiten und dritten Leistungshalbleiterschalter der Reihenschaltung einen Wechselstromanschluss bildet. Die Verknüpfungspunkte zwischen dem ersten und zweiten Leistungshalbleiterschalter der Reihenschaltung und dem dritten und vierten Leistungshalbleiterschalter der Reihenschaltung sind jeweils über einen weiteren Leistungshalbleiterschalter mit einem Neutralanschluss verbunden, der somit auch einen Verknüpfungspunkt der beiden weiteren Leistungshalbleiterschalter bildet. Eine solche Brückentopologie wird auch als ANPC-Brückenschaltung (Active-Neutral-Point-Clamped-Brückenschaltung) bezeichnet.

Bei einer ANPC-Brückenschaltung wird üblicherweise ein geteilter Gleichspannungszwischenkreis mit den Gleichspannungsanschlüssen der Brückenschaltung verbunden, wobei der Mittelpunkt des geteilten Gleichspannungszwischenkreises mit dem Neutralanschluss der Brückenschaltung verbunden ist. Im regulären Betrieb einer ANPC-Brückenschaltung liegt dann an jedem der Leistungshalbleiterschalter maximal die halbe Zwischenkreisspannung an. Hingegen kann es bei gleichzeitiger Ansteuerung aller Leistungshalbleiterschalter zur Überführung in einen ausgeschalteten Zustand passieren, dass an einzelnen Leistungshalbleiterschaltern die volle Zwischenkreisspannung anliegt, also der doppelte Wert der im Betrieb auftretenden Spannung.

In der vorgenannten Druckschrift EP2779345A1 werden daher verschiedene Formen von Abschaltvorgängen beschrieben, bei denen die Leistungshalbleiterschalter einer ANPC-Brückenschaltung in einer bestimmten Reihenfolge, und nicht gleichzeitig zur Überführung in einen ausgeschalteten Zustand angesteuert werden. Sofern sich dabei zu Beginn des Abschaltvorgangs der erste oder der vierte Leistungshalbleiterschalter der Reihenschaltung in einem eingeschalteten Zustand befinden, werden diese im Verlauf der in der vorgenannten Druckschrift EP2779345A1 beschriebenen Abschaltvorgänge immer vor allen anderen Leistungshalbleiterschaltern, also als erste in einen ausgeschalteten Zustand überführt.

Im Hinblick auf eine möglichst schnelle Herstellung eines sicheren Zustandes im Fehlerfall kann es bei Verwendung von Leistungshalbleiterschaltern unterschiedlicher Technologien innerhalb der Brückenschaltung vorteilhaft sein, zuerst den zweiten oder dritten Leistungshalbleiterschalter der Reihenschaltung vor allen anderen Leistungshalbleiterschaltern zur Überführung in einen ausgeschalteten Zustand anzusteuern und nicht, wie in der vorgenannten Druckschrift EP2779345A1, den ersten bzw. vierten Leistungshalbleiterschalter der Reihenschaltung.

Bei den in der vorgenannten Druckschrift EP2779345A1 beschriebenen Abschaltvorgängen wird insbesondere auch nicht berücksichtigt, dass die Potentiale an den Verknüpfungspunkten zwischen dem ersten und zweiten Leistungshalbleiterschalter der Reihenschaltung und dem dritten und vierten Leistungshalbleiterschalter der Reihenschaltung schweben können und dadurch im Verlauf des Abschaltvorgangs Spannungen von mehr als der halben Zwischenkreisspannung an einzelnen Leistungshalbleiterschaltern anliegen können.

Die Druckschrift M. Gleissner, R. Maier and M. -M. Bakran, "Comparison of fault-tolerant multilevel inverters," 2017 19th European Conference on Power Electronics and Applications (EPE'17 ECCE Europe), 2017, pp. P.1-P.10 offenbart von der Fehlerart abhängige Konstellationen von Zuständen von Leistungshalbleiterschaltern einer Brückenschaltung eines dreiphasigen Multilevel-Wechselrichters, unter anderem einer ANPC-Brückenschaltung, die im Fall eines festgestellten Defektes an einem der Leistungshalbleiterschalter einer der Brückenschaltungen fest für die Leistungshalbleiterschalter dieser Brückenschaltung eingestellt werden, woraufhin die Leistungshalbleiterschalter der Brückenschaltungen der beiden anderen Phasen weiter mit einem angepassten Taktverfahren angesteuert werden können, sodass der Wechselrichter dann insgesamt, im Fall einer ANPC-Brückenschaltung mit reduzierter Leistung, weiter zur Erzeugung eines dreiphasigen Ausgangssignals betrieben werden kann.

Es ist eine Aufgabe der vorliegenden Erfindung, ein Verfahren zum Ausschalten von Leistungshalbleiterschaltern einer Brückenschaltung bzw. eine entsprechende Brückenschaltung bereitzustellen, bei denen eine Herstellung einer Konstellation, in der alle Leistungshalbleiterschalter der Brückenschaltung sich in einem ausgeschalteten Zustand befinden, ermöglicht wird, ohne dass dabei im Verlauf des Abschaltvorgangs an einzelnen Leistungshalbleiterschaltern höhere Spannungen auftreten als im regulären Betrieb der Brückenschaltung.

Diese Aufgabe wird erfindungsgemäß gelöst durch ein Verfahren gemäß dem unabhängigen Anspruch 1, durch ein Verfahren gemäß dem unabhängigen Anspruch 6, durch eine Brückenschaltung gemäß dem unabhängigen Anspruch 13 sowie durch einen Wechselrichter gemäß dem unabhängigen Anspruch 15, der eine solche Brückenschaltung umfasst. Vorteilhafte Ausgestaltungen der Erfindung sind in den abhängigen Ansprüchen beschrieben.

Ein erstes erfindungsgemäßes Verfahren zum Ausschalten von Leistungshalbleiterschaltern einer Brückenschaltung, bei der ein erster Gleichspannungsanschluss der Brückenschaltung über einen ersten Leistungshalbleiterschalter mit einem ersten Zwischenpunkt, der erste Zwischenpunkt über einen zweiten Leistungshalbleiterschalter mit einem Wechselstromanschluss der Brückenschaltung, der Wechselstromanschluss über einen dritten Leistungshalbleiterschalter mit einem zweiten Zwischenpunkt und der zweite Zwischenpunkt über einen vierten Leistungshalbleiterschalter mit einem zweiten Gleichspannungsanschluss der Brückenschaltung verbunden ist und bei der ein Neutralanschluss der Brückenschaltung über einen fünften Leistungshalbleiterschalter mit dem ersten Zwischenpunkt und über einen sechsten Leistungshalbleiterschalter mit dem zweiten Zwischenpunkt verbunden ist, umfasst einen Abschaltvorgang, bei dem eine Konstellation hergestellt wird, in der alle Leistungshalbleiterschalter der Brückenschaltung sich in einem ausgeschalteten Zustand befinden. Im Verlauf des Abschaltvorgangs wird dabei gezielt eine Konstellation hergestellt, in der der fünfte Leistungshalbleiterschalter und der sechste Leistungshalbleiterschalter sich gleichzeitig in einem eingeschalteten Zustand befinden, während der erste Leistungshalbleiterschalter und der vierte Leistungshalbleiterschalter sich in einem ausgeschalteten Zustand befinden, und wobei ausgehend von einer zu Beginn des Abschaltvorgangs vorliegenden Konstellation, in der der erste Leistungshalbleiterschalter, der sechste Leistungshalbleiterschalter und entweder der zweite Leistungshalbleiterschalter oder der dritte Leistungshalbleiterschalter sich in einem eingeschalteten Zustand und alle anderen Leistungshalbleiterschalter sich in einem ausgeschalteten Zustand befinden, im Verlauf des Abschaltvorgangs der fünfte Leistungshalbleiterschalter in einen eingeschalteten Zustand überführt wird, nachdem im Verlauf des Abschaltvorgangs der erste Leistungshalbleiterschalter in einen ausgeschalteten Zustand überführt wurde.

Dadurch, dass der fünfte Leistungshalbleiterschalter und der sechste Leistungshalbleiterschalter sich gleichzeitig in einem eingeschalteten Zustand befinden, wird bei dieser Konstellation bewirkt, dass sowohl das Potential an dem ersten Zwischenpunkt zwischen dem ersten Leistungshalbleiterschalter und dem zweiten Leistungshalbleiterschalter als auch das Potential an dem zweiten Zwischenpunkt zwischen dem dritten Leistungshalbleiterschalter und dem vierten Leistungshalbleiterschalter fest auf das an dem Neutralanschluss der Brückenschaltung vorliegende Potential geklemmt wird und infolgedessen nicht mehr schweben kann. Dadurch kann an jedem der Leistungshalbleiterschalter der Brückenschaltung maximal die zwischen dem ersten Gleichspannungsanschluss und dem Neutralanschluss bzw. die zwischen dem zweiten Gleichspannungsanschluss und dem Neutralanschluss anliegende Spannung anliegen. Der ausgeschaltete Zustand des ersten Leistungshalbleiterschalters und des vierten Leistungshalbleiterschalters verhindert dabei einen Kurzschluss zwischen dem ersten Gleichspannungsanschluss und dem Neutralanschluss und zwischen dem zweiten Gleichspannungsanschluss und dem Neutralanschluss.

Dabei kann im Verlauf des Abschaltvorgangs der erste Leistungshalbleiterschalter in einen ausgeschalteten Zustand überführt werden, nachdem im Verlauf des Abschaltvorgangs der zweite Leistungshalbleiterschalter oder der dritte Leistungshalbleiterschalter in einen ausgeschalteten Zustand überführt wurde.

Es kann aber auch im Verlauf des Abschaltvorgangs der zweite Leistungshalbleiterschalter oder der dritte Leistungshalbleiterschalter in einen ausgeschalteten Zustand überführt werden, nachdem im Verlauf des Abschaltvorgangs der erste Leistungshalbleiterschalter in einen ausgeschalteten Zustand überführt wurde.

Alternativ können im Verlauf des Abschaltvorgangs der zweite Leistungshalbleiterschalter oder der dritte Leistungshalbleiterschalter und der erste Leistungshalbleiterschalter auch gleichzeitig zur Überführung in einen ausgeschalteten Zustand angesteuert werden. Die zeitliche Relation der Überführung in einen ausgeschalteten Zustand ergibt sich dann aus der jeweiligen Schaltgeschwindigkeit der Leistungshalbleiterschalter.

In einer weiteren Ausführungsform eines erfindungsgemäßen Verfahrens wird im Verlauf des Abschaltvorgangs der zweite Leistungshalbleiterschalter oder der dritte Leistungshalbleiterschalter in einen ausgeschalteten Zustand überführt, nachdem im Verlauf des Abschaltvorgangs der fünfte Leistungshalbleiterschalter in einen eingeschalteten Zustand überführt wurde. In Verbindung mit der Bedingung, dass im Verlauf des Abschaltvorgangs der fünfte Leistungshalbleiterschalter in einen eingeschalteten Zustand überführt wird, nachdem im Verlauf des Abschaltvorgangs der erste Leistungshalbleiterschalter in einen ausgeschalteten Zustand überführt wurde, wird bei dieser Ausführungsform implizit auch im Verlauf des Abschaltvorgangs der zweite Leistungshalbleiterschalter oder der dritte Leistungshalbleiterschalter in einen ausgeschalteten Zustand überführt, nachdem im Verlauf des Abschaltvorgangs der erste Leistungshalbleiterschalter in einen ausgeschalteten Zustand überführt wurde.

In einem zweiten erfindungsgemäßen Verfahren tritt auch eine Konstellation auf, in der der vierte Leistungshalbleiterschalter, der fünfte Leistungshalbleiterschalter und entweder der zweite Leistungshalbleiterschalter oder der dritte Leistungshalbleiterschalter sich in einem eingeschalteten Zustand und alle anderen Leistungshalbleiterschalter sich in einem ausgeschalteten Zustand befinden. Ausgehend von einer solchen Konstellation zu Beginn des Abschaltvorgangs kann dann in einer weiteren Ausführungsform des erfindungsgemäßen Verfahrens im Verlauf des Abschaltvorgangs der sechste Leistungshalbleiterschalter in einen eingeschalteten Zustand überführt werden, nachdem im Verlauf des Abschaltvorgangs der vierte Leistungshalbleiterschalter in einen ausgeschalteten Zustand überführt wurde.

Dabei kann im Verlauf des Abschaltvorgangs der vierte Leistungshalbleiterschalter in einen ausgeschalteten Zustand überführt werden, nachdem im Verlauf des Abschaltvorgangs der zweite Leistungshalbleiterschalter oder der dritte Leistungshalbleiterschalter in einen ausgeschalteten Zustand überführt wurde.

Es kann aber auch im Verlauf des Abschaltvorgangs der zweite Leistungshalbleiterschalter oder der dritte Leistungshalbleiterschalter in einen ausgeschalteten Zustand überführt werden, nachdem im Verlauf des Abschaltvorgangs der vierte Leistungshalbleiterschalter in einen ausgeschalteten Zustand überführt wurde.

Alternativ können im Verlauf des Abschaltvorgangs der zweite Leistungshalbleiterschalter oder der dritte Leistungshalbleiterschalter und der vierte Leistungshalbleiterschalter auch gleichzeitig zur Überführung in einen ausgeschalteten Zustand angesteuert werden. Die zeitliche Relation der Überführung in einen ausgeschalteten Zustand ergibt sich dann aus der jeweiligen Schaltgeschwindigkeit der Leistungshalbleiterschalter.

In einer weiteren Ausführungsform eines erfindungsgemäßen Verfahrens wird im Verlauf des Abschaltvorgangs der zweite Leistungshalbleiterschalter oder der dritte Leistungshalbleiterschalter in einen ausgeschalteten Zustand überführt, nachdem im Verlauf des Abschaltvorgangs der sechste Leistungshalbleiterschalter in einen eingeschalteten Zustand überführt wurde. In Verbindung mit der Bedingung, dass im Verlauf des Abschaltvorgangs der sechste Leistungshalbleiterschalter in einen eingeschalteten Zustand überführt wird, nachdem im Verlauf des Abschaltvorgangs der vierte Leistungshalbleiterschalter in einen ausgeschalteten Zustand überführt wurde, wird bei dieser Ausführungsform implizit auch im Verlauf des Abschaltvorgangs der zweite Leistungshalbleiterschalter oder der dritte Leistungshalbleiterschalter in einen ausgeschalteten Zustand überführt, nachdem im Verlauf des Abschaltvorgangs der vierte Leistungshalbleiterschalter in einen ausgeschalteten Zustand überführt wurde.

Bei einer Ausgestaltung des erfindungsgemäßen Verfahrens werden im Verlauf des Abschaltvorgangs der fünfte Leistungshalbleiterschalter und der sechste Leistungshalbleiterschalter in einen ausgeschalteten Zustand überführt, nachdem im Verlauf des Abschaltvorgangs eine Konstellation hergestellt wurde, in der der fünfte Leistungshalbleiterschalter und der sechste Leistungshalbleiterschalter sich in einem eingeschalteten Zustand und alle anderen Leistungshalbleiterschalter sich in einem ausgeschalteten Zustand befinden.

Dabei kann im Verlauf des Abschaltvorgangs ausgehend von der Konstellation, in der der fünfte Leistungshalbleiterschalter und der sechste Leistungshalbleiterschalter sich in einem eingeschalteten Zustand und alle anderen Leistungshalbleiterschalter sich in einem ausgeschalteten Zustand befinden, zunächst der dritte Leistungshalbleiterschalter in einen eingeschalteten Zustand überführt werden, wenn ein positiver Strom am Wechselstromanschluss vorliegt, und der zweite Leistungshalbleiterschalter in einen eingeschalteten Zustand überführt werden, wenn ein negativer Strom am Wechselstromanschluss vorliegt. Der dritte Leistungshalbleiterschalter bzw. der zweite Leistungshalbleiterschalter werden dann wieder in einen ausgeschalteten Zustand überführt, nachdem zuvor im Verlauf des Abschaltvorgangs der fünfte Leistungshalbleiterschalter und der sechste Leistungshalbleiterschalter in einen ausgeschalteten Zustand überführt wurden. Eine Stromrichtung als positiver Strom oder negativer Strom ergibt sich dabei daraus, dass ein gegenüber einem Potential am Neutralanschluss positives Potential am ersten Gleichspannungsanschluss und ein gegenüber dem Potential am Neutralanschluss negatives Potential am zweiten Gleichspannungsanschluss anliegt und ein Stromfluss von einem positiven Potential zu einem negativen Potential oder zu einem Potential an einem Neutralanschluss als positiver Strom bezeichnet wird, bzw. umgekehrt ein Stromfluss von einem negativen Potential zu einem positiven Potential oder zu einem Potential an einem Neutralanschluss als negativer Strom.

Bei der zuvor beschriebenen Ausführungsform kann im Verlauf des Abschaltvorgangs der dritte Leistungshalbleiterschalter bzw. der zweite Leistungshalbleiterschalter in einen ausgeschalteten Zustand überführt werden, nachdem seit einem Zeitpunkt, zu dem der fünfte Leistungshalbleiterschalter und der sechste Leistungshalbleiterschalter in einen ausgeschalteten Zustand überführt wurden, eine vorgebbare Zeit vergangen ist und/oder ein Nulldurchgang des Stromes am Wechselstromanschluss stattgefunden hat.

Eine erfindungsgemäße Brückenschaltung weist einen ersten Leistungshalbleiterschalter, einen zweiten Leistungshalbleiterschalter, einen dritten Leistungshalbleiterschalter, einen vierten Leistungshalbleiterschalter, einen fünften Leistungshalbleiterschalter und einen sechsten Leistungshalbleiterschalter auf, wobei ein erster Gleichspannungsanschluss der Brückenschaltung über den ersten Leistungshalbleiterschalter mit einem ersten Zwischenpunkt, der erste Zwischenpunkt über den zweiten Leistungshalbleiterschalter mit einem Wechselstromanschluss der Brückenschaltung, der Wechselstromanschluss über den dritten Leistungshalbleiterschalter mit einem zweiten Zwischenpunkt und der zweite Zwischenpunkt über den vierten Leistungshalbleiterschalter mit einem zweiten Gleichspannungsanschluss der Brückenschaltung verbunden ist und weiterhin ein Neutralanschluss der Brückenschaltung über den fünften Leistungshalbleiterschalter mit dem ersten Zwischenpunkt und über den sechsten Leistungshalbleiterschalter mit dem zweiten Zwischenpunkt verbunden ist. Eine erfindungsgemäße Brückenschaltung weist ferner eine Steuereinheit zum Ansteuern der Leistungshalbleiterschalter der Brückenschaltung zur Überführung von einem ausgeschalteten Zustand in einen eingeschalteten Zustand und umgekehrt auf und kennzeichnet sich dadurch aus, dass die Steuereinheit zur Ausführung eines erfindungsgemäßen Verfahrens eingerichtet ist.

In einer Ausführungsform der Brückenschaltung sind die Leistungshalbleiterschalter derart ausgerichtet, dass der erste Leistungshalbleiterschalter im eingeschalteten Zustand einen Stromfluss von dem ersten Gleichspannungsanschluss zu dem ersten Zwischenpunkt, der zweite Leistungshalbleiterschalter im eingeschalteten Zustand einen Stromfluss von dem ersten Zwischenpunkt zu dem Wechselstromanschluss, der dritte Leistungshalbleiterschalter im eingeschalteten Zustand einen Stromfluss von dem Wechselstromanschluss zu dem zweiten Zwischenpunkt, der vierte Leistungshalbleiterschalter im eingeschalteten Zustand einen Stromfluss von dem zweiten Zwischenpunkt zu dem zweiten Gleichspannungsanschluss, der fünfte Leistungshalbleiterschalter im eingeschalteten Zustand einen Stromfluss von dem ersten Zwischenpunkt zu dem Neutralanschluss und der sechste Leistungshalbleiterschalter im eingeschalteten Zustand einen Stromfluss von dem Neutralanschluss zu dem zweiten Zwischenpunkt ermöglicht. Zu jedem Leistungshalbleiterschalter ist dabei jeweils eine antiparallele Diode angeordnet, die jeweils derart ausgerichtet ist, dass sie einen Stromfluss entgegen der im eingeschalteten Zustand des jeweiligen Leistungshalbleiterschalters ermöglichten Stromflussrichtung ermöglicht.

Bei einer Ausführungsform der erfindungsgemäßen Brückenschaltung sind der zweite Leistungshalbleiterschalter und der dritte Leistungshalbleiterschalter als Feldeffekttransistoren, insbesondere als SiC-MOSFETs, und die anderen Leistungshalbleiterschalter als Bipolartransistoren, insbesondere als IGBTs in Si-Technologie, ausgeführt.

Eine Anordnung von Leistungshalbleiterschaltern wie bei einer erfindungsgemäßen Brückenschaltung findet sich beispielsweise bei einer sogenannten ANPC-Brückenschaltung, welche als Dreipunkttopologie drei Spannungspegel an den Wechselspannungsanschluss der Brückenschaltung anlegt. Die Anordnung kann aber auch Bestandteil einer Multilevel-Topologie mit noch mehr als drei Spannungspegeln sein. In dem Fall sind an dem ersten Gleichspannungsanschluss und dem zweiten Gleichspannungsanschluss weitere Leistungshalbleiterschalter zu dem ersten bis vierten Leistungshalbleiterschalter in Reihe geschaltet, deren Verknüpfungspunkte weitere Zwischenpunkte bilden, die wiederum über Dioden oder weitere Leistungshalbleiterschalter mit dem Neutralanschluss der Brückenschaltung oder weiteren Neutralanschlüssen der Brückenschaltung verbunden sein können. Aus der Lehre der vorliegenden Erfindung lässt sich in dem Fall leicht eine Lehre zur Ansteuerung der weiteren Leistungshalbleiterschalter ableiten, wonach im Verlauf eines Abschaltvorgangs gezielt eine Konstellation hergestellt wird, in der die mit einem der gegebenenfalls mehreren Neutralanschlüsse verbundenen Leistungshalbleiterschalter sich gleichzeitig in einem eingeschalteten Zustand befinden.

Ein erfindungsgemäßer Wechselrichter umfasst mindestens eine erfindungsgemäße Brückenschaltung. Ein solcher erfindungsgemäßer Wechselrichter kann beispielsweise ein einphasiger Wechselrichter sein, bei dem beispielsweise auch zwei erfindungsgemäße Brückenschaltungen versetzt getaktet werden, es kann aber beispielsweise auch ein dreiphasiger Wechselrichter sein, bei dem mindestens drei erfindungsgemäße Brückenschaltungen versetzt getaktet werden.

Die genannten zeitlichen Relationen von Überführungen in Zustände beziehen sich in der vorliegenden Beschreibung des erfindungsgemäßen Verfahrens immer auf den Abschluss einer Überführung in einen ein- oder ausgeschalteten Zustand, das heißt, die Vorgänge zum Überführen in einen ein- oder ausgeschalteten Zustand können durchaus auch zeitlich überlappen, sofern die Abschlüsse der Vorgänge den genannten Relationen genügen. Es kann aber auch eine Ansteuerung zur Überführung eines Leistungshalbleiterschalters in einen ein- oder ausgeschalteten Zustand erst dann erfolgen, wenn eine als vorhergehend geforderte Überführung eines anderen Leistungshalbleiterschalters in einen ein- oder ausgeschalteten Zustand abgeschlossen ist.

Im Folgenden wird die Erfindung anhand von Figuren näher erläutert. Die Figuren dienen hierbei der Veranschaulichung von Ausführungsformen der Erfindung, beschränken die Erfindung aber nicht auf die gezeigten Merkmale.
Fig. 1 zeigt eine erfindungsgemäße Brückenschaltung,
Fig. 2 zeigt eine Tabelle mit Konstellationen von Zuständen von Leistungshalbleiterschaltern bei einem erfindungsgemäßen Verfahren,
Fig. 3 zeigt eine Tabelle mit Konstellationen von Zuständen von Leistungshalbleiterschaltern bei einer weiteren Ausführungsform eines erfindungsgemäßen Verfahrens,
Fig. 4 zeigt eine Tabelle mit Konstellationen von Zuständen von Leistungshalbleiterschaltern bei einer weiteren Ausführungsform eines erfindungsgemäßen Verfahrens,
Fig. 5 zeigt eine Tabelle mit Konstellationen von Zuständen von Leistungshalbleiterschaltern bei einer weiteren Ausführungsform eines erfindungsgemäßen Verfahrens,
Fig. 6 zeigt eine Tabelle mit Konstellationen von Zuständen von Leistungshalbleiterschaltern bei einer weiteren Ausführungsform eines erfindungsgemäßen Verfahrens,
Fig. 7 zeigt eine Tabelle mit Konstellationen von Zuständen von Leistungshalbleiterschaltern bei einer weiteren Ausführungsform eines erfindungsgemäßen Verfahrens,
Fig. 8 zeigt eine Tabelle mit Konstellationen von Zuständen von Leistungshalbleiterschaltern bei einer weiteren Ausführungsform eines erfindungsgemäßen Verfahrens,
Fig. 9 zeigt eine Tabelle mit Konstellationen von Zuständen von Leistungshalbleiterschaltern bei einer weiteren Ausführungsform eines erfindungsgemäßen Verfahrens,
Fig. 10 zeigt eine Tabelle mit Konstellationen von Zuständen von Leistungshalbleiterschaltern bei einer weiteren Ausführungsform eines erfindungsgemäßen Verfahrens,
Fig. 11 zeigt eine Tabelle mit Konstellationen von Zuständen von Leistungshalbleiterschaltern bei einer weiteren Ausführungsform eines erfindungsgemäßen Verfahrens, und
Fig. 12 zeigt einen erfindungsgemäßen Wechselrichter.

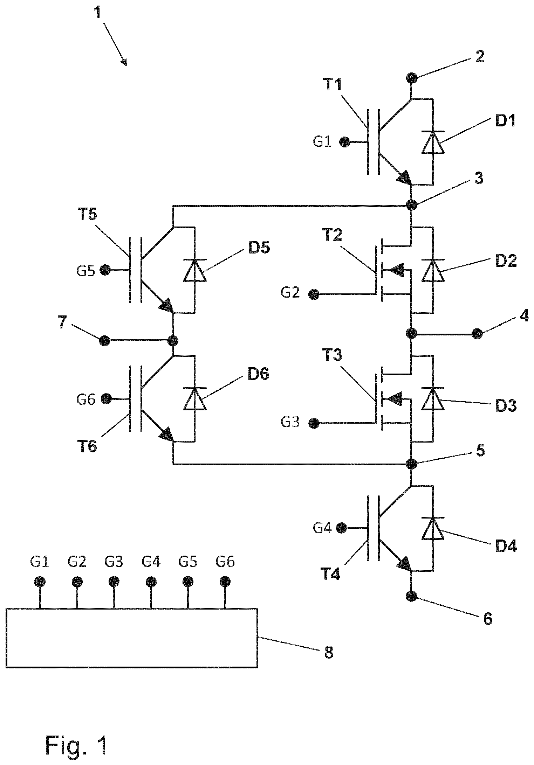

Fig. 1 zeigt eine erfindungsgemäße Brückenschaltung 1, bei der ein erster Gleichspannungsanschluss 2 der Brückenschaltung 1 über eine Reihenschaltung eines ersten Leistungshalbleiterschalters T1, eines zweiten Leistungshalbleiterschalters T2, eines dritten Leistungshalbleiterschalters T3 und eines vierten Leistungshalbleiterschalters T4 mit einem zweiten Gleichspannungsanschluss 6 der Brückenschaltung 1 verbunden ist. Ein Verknüpfungspunkt zwischen dem ersten Leistungshalbleiterschalter T1 und dem zweiten Leistungshalbleiterschalter T2 bildet einen ersten Zwischenpunkt 3 und ein Verknüpfungspunkt zwischen dem dritten Leistungshalbleiterschalter T3 und dem vierten Leistungshalbleiterschalters T4 bildet einen zweiten Zwischenpunkt 5. Ein Wechselstromanschluss 4 der Brückenschaltung 1 wird durch einen Verknüpfungspunkt zwischen dem zweiten Leistungshalbleiterschalter T2 und dem dritten Leistungshalbleiterschalter T3 gebildet.

Die Leistungshalbleiterschalter T1 bis T4 sind so ausgerichtet, dass der erste Leistungshalbleiterschalter T1 im eingeschalteten Zustand einen Stromfluss von dem ersten Gleichspannungsanschluss 2 zu dem ersten Zwischenpunkt 3, der zweite Leistungshalbleiterschalter T2 im eingeschalteten Zustand einen Stromfluss von dem ersten Zwischenpunkt 3 zu dem Wechselstromanschluss 4, der dritte Leistungshalbleiterschalter T3 im eingeschalteten Zustand einen Stromfluss von dem Wechselstromanschluss 4 zu dem zweiten Zwischenpunkt 5, der vierte Leistungshalbleiterschalter T4 im eingeschalteten Zustand einen Stromfluss von dem zweiten Zwischenpunkt 5 zu dem zweiten Gleichspannungsanschluss 6 ermöglicht. Zu jedem der Leistungshalbleiterschalter T1 bis T4 ist jeweils eine antiparallele Diode D1 bis D4 angeordnet, die jeweils einen Stromfluss entgegen der Stromflussrichtung ermöglicht, die bei dem jeweiligen Leistungshalbleiterschalter T1 bis T4 im eingeschalteten Zustand möglich ist.

Zwischen dem ersten Zwischenpunkt 3 und dem zweiten Zwischenpunkt 5 ist eine Reihenschaltung eines fünften Leistungshalbleiterschalters T5 und eines sechsten Leistungshalbleiterschalters T6 angeordnet, deren Verknüpfungspunkt einen Neutralanschluss 7 der Brückenschaltung 1 bildet. Die Leistungshalbleiterschalter T5 und T6 sind so ausgerichtet, dass der fünfte Leistungshalbleiterschalter T5 im eingeschalteten Zustand einen Stromfluss von dem ersten Zwischenpunkt 3 zu dem Neutralanschluss 7 und der sechste Leistungshalbleiterschalter T6 im eingeschalteten Zustand einen Stromfluss von dem Neutralanschluss 7 zu dem zweiten Zwischenpunkt 5 ermöglicht. Zu jedem der Leistungshalbleiterschalter T5 und T6 ist jeweils eine antiparallele Diode D5 bzw. D6 so angeordnet, dass durch die Dioden D5 bzw. D6 ein Stromfluss entgegen der im eingeschalteten Zustand des jeweiligen Leistungshalbleiterschalters T5 bzw. T6 ermöglichten Stromflussrichtung möglich ist.

Eine erfindungsgemäße Brückenschaltung 1 weist eine Steuereinheit 8 auf, die den Leistungshalbleiterschaltern T1 bis T6 über Steuereingänge Ansteuersignale G1 bis G6 zuführt, mit denen die Leistungshalbleiterschalter T1 bis T6 zur Überführung von einem ausgeschalteten Zustand in einen eingeschalteten Zustand und umgekehrt angesteuert werden. Die Steuereinheit 8 ist dazu eingerichtet, die Leistungshalbleiterschalter T1 bis T6 im regulären Betrieb unter Verwendung eines Ansteuerverfahrens ein- und auszuschalten. Hierzu sind dem Fachmann verschiedene Ansteuerverfahren bekannt. Insbesondere ist die Steuereinheit 8 jedoch zur Ausführung eines erfindungsgemäßen Verfahrens eingerichtet, um unter Anwendung eines Abschaltvorgangs eine Konstellation herzustellen, in der die Leistungshalbleiterschalter T1 bis T6 sich alle in einem ausgeschalteten Zustand befinden.

Bei dem erfindungsgemäßen Ausführungsbeispiel in Fig. 1 sind der zweite Leistungshalbleiterschalter T2 und der dritte Leistungshalbleiterschalter T3 als Feldeffekttransistoren, beispielsweise als SiC-MOSFETs, und die Leistungshalbleiterschalter T1, T4, T5 und T6 als Bipolartransistoren, beispielsweise als IGBTs in Si-Technologie, ausgeführt. Eine solche Auswahl der Technologien der Leistungshalbleiterschalter T1 bis T6 ermöglicht beispielsweise eine Optimierung der Brückenschaltung im Hinblick auf Schaltverluste und Durchlassverluste der Leistungshalbleiterschalter T1 bis T6 bei Wahl eines Ansteuerverfahrens, bei dem beispielsweise im regulären Betrieb die Leistungshalbleiterschalter T1, T4, T5 und T6 mit der Frequenz eines am Wechselstromanschluss 4 vorliegenden Wechselstroms ein- und ausgeschaltet werden und die Leistungshalbleiterschalter T2 und T3 unter Verwendung eines demgegenüber hochfrequenten pulsweitenmodulierten Signals (PWM-Signal) komplementär zueinander ein-und ausgeschaltet werden.

Bei Anwendung eines anderen Ansteuerverfahrens, bei dem beispielsweise je nach Vorzeichen der am Wechselstromanschluss 4 auszugebenden Spannung der erste und dritte Leistungshalbleiterschalter T1 und T3 oder der vierte und zweite Leistungshalbleiterschalter T4 und T2 unter Verwendung eines hochfrequenten PWM-Signals komplementär zueinander ein- und ausgeschaltet werden, während die jeweils anderen der Leistungshalbleiterschalter T1 bis T6 mit der Frequenz des am Wechselstromanschluss 4 vorliegenden Wechselstroms ein- und ausgeschaltet werden, aber auch vollkommen unabhängig von dem verwendeten Ansteuerverfahren, können auch andere der Leistungshalbleiterschalter T1 bis T6, beispielsweise die Leistungshalbleiterschalter T1 und T4 oder die Leistungshalbleiterschalter T1 bis T4 als Feldeffekttransistoren und die jeweils anderen als Bipolartransistoren ausgeführt sein. Es können auch alle Leistungshalbleiterschalter T1 bis T6 als Feldeffekttransistoren ausgeführt sein oder alle Leistungshalbleiterschalter T1 bis T6 als Bipolartransistoren.

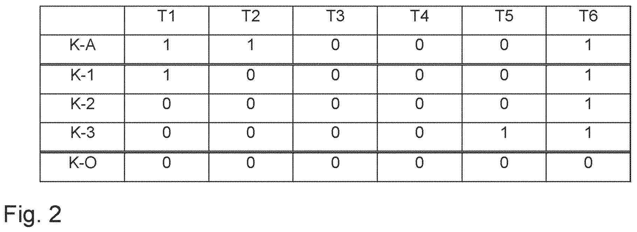

In Fig. 2 ist in Tabellenform eine mögliche Ausführungsform eines Abschaltvorgangs gemäß einem erfindungsgemäßen Verfahren dargestellt, bei dem ausgehend von einer zu Beginn des Abschaltvorgangs vorliegenden Konstellation K-A, bei der der erste, zweite und sechste Leistungshalbleiterschalter T1, T2 und T6 sich in einem eingeschalteten Zustand und der dritte, vierte und fünfte Leistungshalbleiterschalter T3, T4 und T5 sich in einem ausgeschalteten Zustand befinden, eine Konstellation K-O hergestellt wird, in der alle Leistungshalbleiterschalter T1 bis T6 sich in einem ausgeschalteten Zustand befinden. Dazu wird zunächst eine Konstellation K-1 hergestellt, bei der der zweite Leistungshalbleiterschalter T2 in einen ausgeschalteten Zustand überführt wurde. In einem nächsten Schritt wird der Leistungshalbleiterschalter T1 in einen ausgeschalteten Zustand überführt, woraus sich eine Konstellation K-2 ergibt. In einem dritten Schritt wird der fünfte Leistungshalbleiterschalter T5 in einen eingeschalteten Zustand überführt. Hieraus ergibt sich eine Konstellation K-3, bei der, wie es für das erfindungsgemäße Verfahren kennzeichnend ist, der fünfte Leistungshalbleiterschalter T5 und der sechste Leistungshalbleiterschalter T6 sich gleichzeitig in einem eingeschalteten Zustand befinden, während der erste Leistungshalbleiterschalter T1 und der vierte Leistungshalbleiterschalter T4 sich in einem ausgeschalteten Zustand befinden. Anschließend werden der fünfte und der sechste Leistungshalbleiterschalter T5 und T6 zur Herstellung der Konstellation K-O in einen ausgeschalteten Zustand überführt. Die Leistungshalbleiterschalter T5 und T6 können dabei, wie im vorliegenden Beispiel dargestellt, gleichzeitig zur Überführung in den ausgeschalteten Zustand angesteuert werden, sie können aber auch in beliebiger Reihenfolge nacheinander zur Überführung in den ausgeschalteten Zustand angesteuert werden.

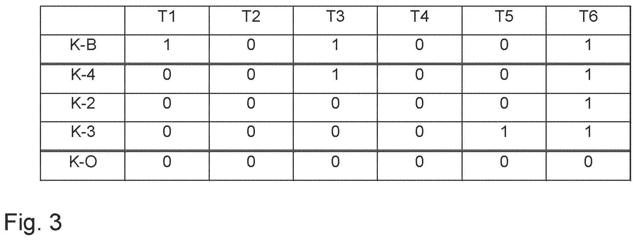

In Fig. 3 ist in Tabellenform eine weitere Möglichkeit von Konstellationen im Verlauf eines Abschaltvorgangs bei einer Ausführungsform eines erfindungsgemäßen Verfahrens gezeigt. Hier wird die Konstellation K-O ausgehend von einer zu Beginn des Abschaltvorgangs vorliegenden Konstellation K-B, bei der der erste, dritte und sechste Leistungshalbleiterschalter T1, T3 und T6 sich in einem eingeschalteten Zustand und der zweite, vierte und fünfte Leistungshalbleiterschalter T2, T4 und T5 sich in einem ausgeschalteten Zustand befinden, hergestellt, indem zunächst eine Konstellation K-4 hergestellt wird, bei der der erste Leistungshalbleiterschalter T1 in einen ausgeschalteten Zustand überführt wurde. Durch anschließendes Überführen des dritten Leistungshalbleiterschalters T3 in einen ausgeschalteten Zustand gelangt man zu der Konstellation K-2, von der ausgehend durch Überführen des fünften Leistungshalbleiterschalters T5 in einen eingeschalteten Zustand die Konstellation K-3 hergestellt wird. Anschließend werden zur Herstellung der Konstellation K-O der fünfte und der sechste Leistungshalbleiterschalter T5 und T6 durch gleichzeitige Ansteuerung in einen ausgeschalteten Zustand überführt. Alternativ können die Leistungshalbleiterschalter T5 und T6 auch derart angesteuert werden, dass sie in beliebiger Reihenfolge nacheinander in einen ausgeschalteten Zustand überführt werden.

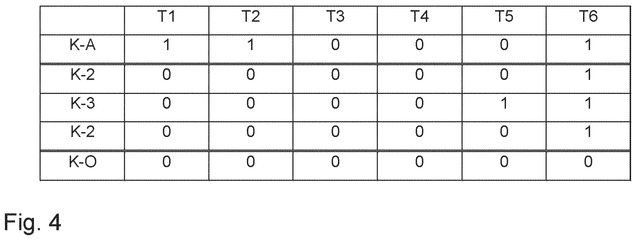

Fig. 4 zeigt ein weiteres Ausführungsbeispiel mit Konstellationen von Zuständen von Leistungshalbleiterschaltern bei einem erfindungsgemäßen Verfahren. Hier wird ausgehend von der zu Beginn des Abschaltvorgangs vorliegenden Konstellation K-A die Konstellation K-O hergestellt, indem in einem ersten Schritt zur Herstellung der Konstellation K-2 der erste und zweite Leistungshalbleiterschalter T1 und T2 nicht wie in den vorhergehenden Ausführungsbeispielen nacheinander in einen ausgeschalteten Zustand überführt werden, sondern gleichzeitig zur Überführung in einen ausgeschalteten Zustand angesteuert werden.

Ausgehend hiervon wird dann die Konstellation K-3 durch Überführen des fünften Leistungshalbleiterschalters T5 in einen eingeschalteten Zustand hergestellt. Zur Konstellation K-O gelangt man dann im vorliegenden Ausführungsbeispiel nicht, wie in den vorhergehenden Ausführungsbeispielen, durch gleichzeitiges Ansteuern des fünften und sechsten Leistungshalbleiterschalters T5 und T6 zur Überführung in einen ausgeschalteten Zustand, sondern indem hier zunächst durch Überführen des fünften Leistungshalbleiterschalters T5 in einen ausgeschalteten Zustand die Konstellation K-2 und dann in einem weiteren Schritt durch Überführen des sechsten Leistungshalbleiterschalters T6 in einen ausgeschalteten Zustand die Konstellation K-O hergestellt wird. Ebenso gut ist es natürlich möglich, zuerst den sechsten Leistungshalbleiterschalter T6 und dann den fünften Leistungshalbleiterschalter T5 in einen ausgeschalteten Zustand zu überführen, um die Konstellation K-O herzustellen.

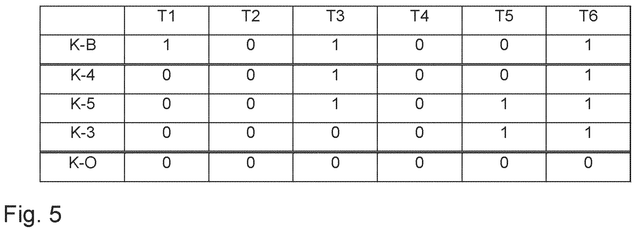

Bei dem in Fig. 5 dargestellten Ausführungsbeispiel von Konstellationen im Verlauf eines Abschaltvorgangs bei einem erfindungsgemäßen Verfahren wird ausgehend von der zu Beginn des Abschaltvorgangs vorliegenden Konstellation K-B die Konstellation K-O hergestellt, indem zunächst durch Überführen des ersten Leistungshalbleiterschalters T1 in einen ausgeschalteten Zustand die Konstellation K-4 hergestellt wird. In einem nächsten Schritt wird dann eine Konstellation K-5 hergestellt, indem der fünfte Leistungshalbleiterschalter T5 in einen eingeschalteten Zustand überführt wird und in einem weiteren Schritt die Konstellation K-3, indem der dritte Leistungshalbleiterschalter T3 in einen ausgeschalteten Zustand überführt wird. Im vorliegenden Ausführungsbeispiel wird also der dritte Leistungshalbleiterschalter T3 in einen ausgeschalteten Zustand überführt, nachdem im Verlauf des Abschaltvorgangs der fünfte Leistungshalbleiterschalter T5 in einen eingeschalteten Zustand überführt wurde. Dadurch ergeben sich bei dem vorliegenden Ausführungsbeispiel in Form der Konstellationen K-5 und K-3 zwei Konstellationen, bei denen, wie es für das erfindungsgemäße Verfahren kennzeichnend ist, der fünfte Leistungshalbleiterschalter T5 und der sechste Leistungshalbleiterschalter T6 sich gleichzeitig in einem eingeschalteten Zustand befinden, während der erste Leistungshalbleiterschalter T1 und der vierte Leistungshalbleiterschalter T4 sich in einem ausgeschalteten Zustand befinden. Die Konstellation K-O wird schließlich hergestellt, indem der fünfte und sechste Leistungshalbleiterschalter T5 und T6 in einen ausgeschalteten Zustand überführt werden, im vorliegenden Fall beispielsweise durch gleichzeitige Ansteuerung.

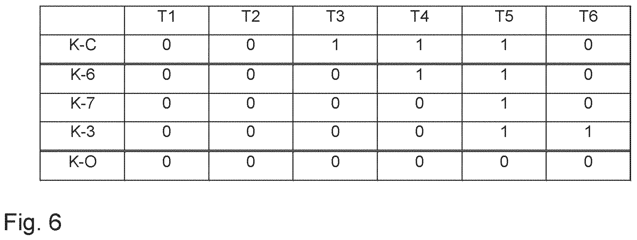

Das Ausführungsbeispiel in Fig. 6 zeigt in Tabellenform einen Abschaltvorgang gemäß einem erfindungsgemäßen Verfahren, bei dem die Konstellation K-O ausgehend von einer zu Beginn des Abschaltvorgangs vorliegenden Konstellation K-C, bei der der dritte, vierte und fünfte Leistungshalbleiterschalter T3, T4 und T5 sich in einem eingeschalteten Zustand und der erste, zweite und sechste Leistungshalbleiterschalter T1, T2 und T6 sich in einem ausgeschalteten Zustand befinden, hergestellt wird. Dazu wird zunächst durch Überführen des dritten Leistungshalbleiterschalters T3 in einen ausgeschalteten Zustand eine Konstellation K-6 hergestellt und in einem nächsten Schritt eine Konstellation K-7, bei der der vierte Leistungshalbleiterschalter T4 in einen ausgeschalteten Zustand überführt wurde. Durch Überführen des sechsten Leistungshalbleiterschalters T6 in einen eingeschalteten Zustand ergibt sich dann die Konstellation K-3, von der ausgehend durch Überführen des fünften und sechsten Leistungshalbleiterschalters T5 und T6 in einen ausgeschalteten Zustand, hier beispielsweise durch gleichzeitige Ansteuerung, die Konstellation K-O hergestellt wird.

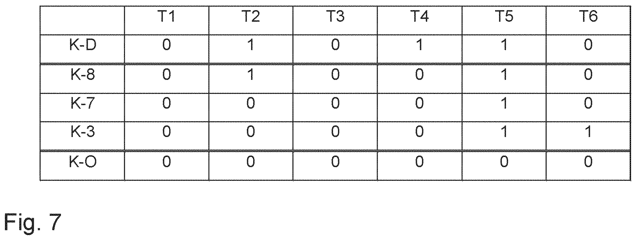

Bei dem Ausführungsbeispiel in Fig. 7 wird ausgehend von einer zu Beginn des Abschaltvorgangs vorliegenden Konstellation K-D, bei der der zweite, vierte und fünfte Leistungshalbleiterschalter T2, T4 und T5 sich in einem eingeschalteten Zustand und der erste, dritte und sechste Leistungshalbleiterschalter T1, T3 und T6 sich in einem ausgeschalteten Zustand befinden, die Konstellation K-O hergestellt, indem zunächst eine Konstellation K-8 hergestellt wird, bei der der vierte Leistungshalbleiterschalter T4 in einen ausgeschalteten Zustand überführt wurde, dann durch Überführen des zweiten Leistungshalbleiterschalters T2 in einen ausgeschalteten Zustand die Konstellation K-7, durch Überführen des sechsten Leistungshalbleiterschalters T6 in einen eingeschalteten Zustand die Konstellation K-3 und schließlich durch Überführen des fünften und sechsten Leistungshalbleiterschalters T5 und T6 in einen ausgeschalteten Zustand, im vorliegenden Ausführungsbeispiel durch gleichzeitige Ansteuerung von T5 und T6, die Konstellation K-O.

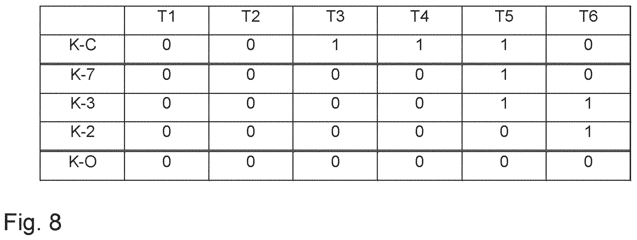

In Fig. 8 ist in Tabellenform ein weiteres Ausführungsbeispiel mit Konstellationen von Zuständen von Leistungshalbleiterschaltern bei einem erfindungsgemäßen Verfahren dargestellt. Ausgehend von der zu Beginn des Abschaltvorgangs vorliegenden Konstellation K-C wird hier die Konstellation K-O hergestellt, indem in einem ersten Schritt der dritte und vierte Leistungshalbleiterschalter T3 und T4 gleichzeitig zur Überführung in einen ausgeschalteten Zustand angesteuert werden, was dann zur Konstellation K-7 führt. Ausgehend hiervon wird dann die Konstellation K-3 durch Überführen des sechsten Leistungshalbleiterschalters T6 in einen eingeschalteten Zustand hergestellt. Zur Konstellation K-O gelangt man dann, indem zunächst durch Überführen des fünften Leistungshalbleiterschalters T5 in einen ausgeschalteten Zustand die Konstellation K-2 hergestellt wird und dann in einem weiteren Schritt durch Überführen des sechsten Leistungshalbleiterschalters T6 in einen ausgeschalteten Zustand die Konstellation K-O. Alternativ ist es natürlich auch möglich, zuerst den sechsten Leistungshalbleiterschalter T6 und dann den fünften Leistungshalbleiterschalter T5 in einen ausgeschalteten Zustand zu überführen, um die Konstellation K-O herzustellen, bzw. alternativ auch beide Leistungshalbleiterschalter T5 und T6 gleichzeitig zur Überführung in einen ausgeschalteten Zustand anzusteuern, wie beispielsweise bei den Ausführungsformen in den Fig. 2, 3, 5, 6 und 7.

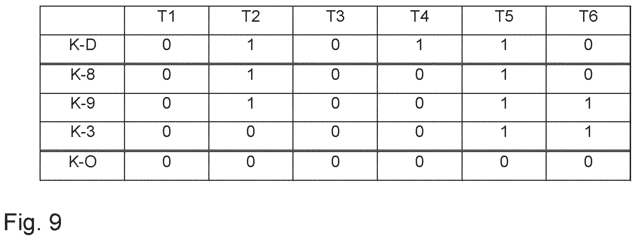

Das Ausführungsbeispiel in Fig. 9 zeigt Konstellationen im Verlauf eines Abschaltvorgangs bei einem erfindungsgemäßen Verfahren bei dem ausgehend von der zu Beginn des Abschaltvorgangs vorliegenden Konstellation K-D die Konstellation K-O hergestellt, indem zunächst durch Überführen des vierten Leistungshalbleiterschalters T4 in einen ausgeschalteten Zustand die Konstellation K-8 hergestellt wird. In einem nächsten Schritt wird dann durch Überführen des sechsten Leistungshalbleiterschalter T6 in einen eingeschalteten Zustand eine Konstellation K-9 hergestellt und in einem weiteren Schritt durch Überführen des zweiten Leistungshalbleiterschalters T2 in einen ausgeschalteten Zustand die Konstellation K-3. Im Verlauf dieses beispielhaften Abschaltvorgangs wird also der zweite Leistungshalbleiterschalter T2 in einen ausgeschalteten Zustand überführt, nachdem der sechste Leistungshalbleiterschalter T6 in einen eingeschalteten Zustand überführt wurde. Dadurch ergeben sich bei dem vorliegenden Ausführungsbeispiel in Form der Konstellationen K-9 und K-3 zwei Konstellationen, bei denen, wie es für das erfindungsgemäße Verfahren kennzeichnend ist, der fünfte Leistungshalbleiterschalter T5 und der sechste Leistungshalbleiterschalter T6 sich gleichzeitig in einem eingeschalteten Zustand befinden, während der erste Leistungshalbleiterschalter T1 und der vierte Leistungshalbleiterschalter T4 sich in einem ausgeschalteten Zustand befinden. Die Konstellation K-O wird schließlich hergestellt, indem der fünfte und sechste Leistungshalbleiterschalter T5 und T6, im vorliegenden Fall beispielsweise durch gleichzeitige Ansteuerung, in einen ausgeschalteten Zustand überführt werden.

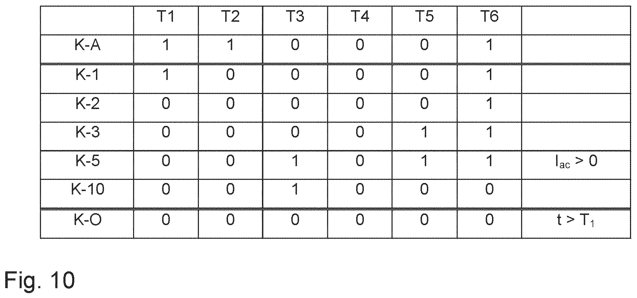

In Fig. 10 ist weiteres Ausführungsbeispiel eines erfindungsgemäßen Verfahrens dargestellt, bei dem beispielsweise ausgehend von der zu Beginn des Abschaltvorgangs vorliegenden Konstellation K-A im Verlauf des Abschaltvorgangs über die Konstellationen K-1 und K-2 die Konstellation K-3 hergestellt wird. Ausgehend hiervon wird dann, aufgrund des Vorliegens eines positiven Stroms I_{ac} am Wechselstromanschluss 4 der Brückenschaltung 1 die Konstellation K-5 hergestellt, indem der dritte Leistungshalbleiterschalter T3 in einen eingeschalteten Zustand überführt wird. Durch Überführen des fünften und sechsten Leistungshalbleiterschalters T5 und T6 in einen ausgeschalteten Zustand, im vorliegenden Fall durch gleichzeitige Ansteuerung, wird dann eine Konstellation K-10 hergestellt und schließlich, nachdem eine vorgegebene Zeitdauer T₁ nach dem Herstellen der Konstellation K-10 vergangen ist, der dritte Leistungshalbleiterschalter T3 wieder in einen ausgeschalteten Zustand überführt und dadurch die Konstellation K-O hergestellt. Alternativ oder zusätzlich zu einer vorgegebenen Zeitdauer T₁ kann auch ein Nulldurchgang des Stroms I_{ac} am Wechselstromanschluss 4 der Brückenschaltung 1 nach dem Herstellen der Konstellation K-10 als Kriterium zum Übergang von der Konstellation K-10 zur Konstellation K-O verwendet werden.

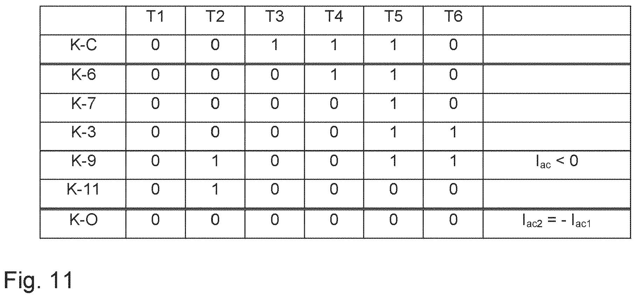

Bei dem Ausführungsbeispiel eines erfindungsgemäßen Verfahrens in Fig. 11 wird zunächst beispielsweise ausgehend von der zu Beginn des Abschaltvorgangs vorliegenden Konstellation K-C im Verlauf des Abschaltvorgangs über die Konstellationen K-6 und K-7 die Konstellation K-3 hergestellt. Aufgrund des Vorliegens eines negativen Stroms I_{ac} am Wechselstromanschluss 4 der Brückenschaltung 1 wird dann durch Überführen des zweiten Leistungshalbleiterschalters T2 in einen eingeschalteten Zustand die Konstellation K-9 hergestellt. Durch Überführen des fünften und sechsten Leistungshalbleiterschalters T5 und T6 in einen ausgeschalteten Zustand, im vorliegenden Fall durch gleichzeitige Ansteuerung, wird dann eine Konstellation K-11 hergestellt und nachdem nach dem Herstellen der Konstellation K-11 ein Nulldurchgang des Stroms I_{ac} am Wechselstromanschluss 4 der Brückenschaltung 1 stattgefunden hat, die Konstellation K-O hergestellt, indem der zweite Leistungshalbleiterschalter T2 wieder in einen ausgeschalteten Zustand überführt wird. Alternativ oder zusätzlich zu einem Nulldurchgang des Stroms I_{ac} am Wechselstromanschluss 4 der Brückenschaltung 1 kann auch ein Verstreichen einer vorgegebenen Zeitdauer T₁ nach dem Herstellen der Konstellation K-10 als Kriterium zum Übergang von der Konstellation K-10 zur Konstellation K-O verwendet werden.

Zusätzlich zu den in den Fig. 2 bis 11 dargestellten Ausführungsformen lassen sich noch eine Vielzahl weiterer Varianten von Abschaltvorgängen ableiten, mit denen bei einem erfindungsgemäßen Verfahren ausgehend von einer zu Beginn des Abschaltvorgangs vorliegenden Konstellation K-A, K-B, K-C oder K-D, sowie je nach im regulären Betrieb der erfindungsgemäßen Brückenschaltung 1 verwendetem Ansteuerverfahren auch anderen zu Beginn des Abschaltvorgangs vorliegenden Konstellationen, die Konstellation K-O hergestellt wird, wobei diese Abschaltvorgänge mindestens eine der Konstellationen K-3, K-5 oder K-9 umfassen, bei denen, wie es für das erfindungsgemäße Verfahren kennzeichnend ist, der fünfte Leistungshalbleiterschalter T5 und der sechste Leistungshalbleiterschalter T6 sich gleichzeitig in einem eingeschalteten Zustand befinden, während der erste Leistungshalbleiterschalter T1 und der vierte Leistungshalbleiterschalter T4 sich in einem ausgeschalteten Zustand befinden.

Bei dem erfindungsgemäßen Verfahren ist es vorteilhaft, wenn nach jedem Übergang von einer Konstellation zur nächsten abgewartet wird, bis transiente Vorgänge bei den Strömen und Potentialen innerhalb der Brückenschaltung 1 abgeschlossen sind, bevor eine Ansteuerung der Leistungshalbleiterschalter T1 bis T6 zum Übergang zur jeweils nächsten Konstellation erfolgt. Dies ist insbesondere bei den Konstellationen K-3, K-5 und K-9 vorteilhaft, um definierte Werte der Potentiale an den Zwischenpunkten 3 und 5 zu gewährleisten.

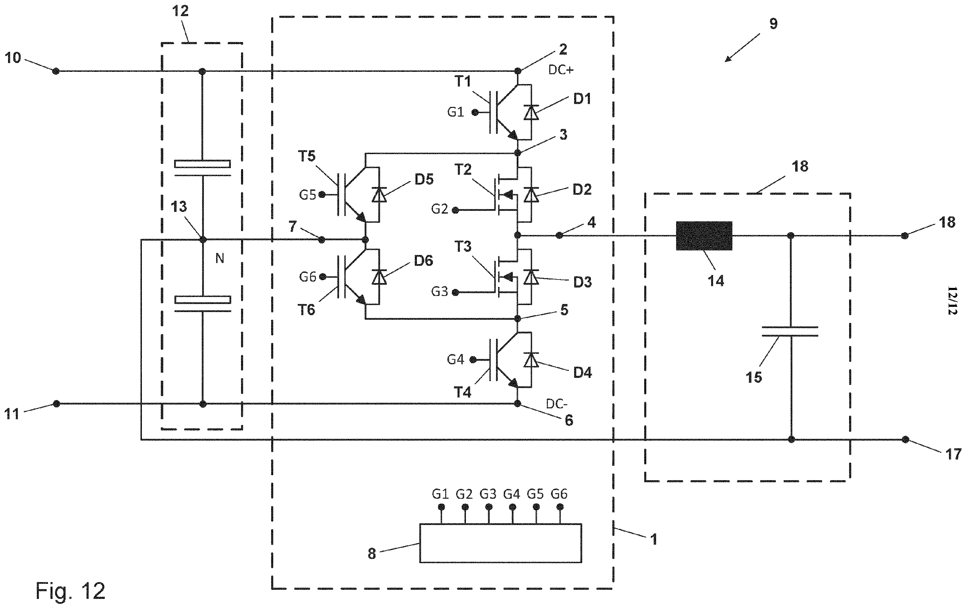

In Fig. 12 ist ein erfindungsgemäßer Wechselrichter 9 dargestellt. Dieser weist zunächst eine erfindungsgemäße Brückenschaltung 1 auf. Zwischen dem ersten Gleichspannungsanschluss 2 der Brückenschaltung 1, der mit einem ersten Eingangsanschluss 10 des Wechselrichters 9 verbunden ist, und dem zweiten Gleichspannungsanschluss 6 der Brückenschaltung 1, der mit einem zweiten Eingangsanschluss 11 des Wechselrichters 9 verbunden ist, ist ein geteilter Gleichspannungszwischenkreis 12 angeordnet. Der Neutralanschluss 7 der Brückenschaltung 1 ist mit einem Mittelpunkt 13 des geteilten Gleichspannungszwischenkreises 12 verbunden. Über eine Drossel 14 ist der Wechselstromanschluss 4 der Brückenschaltung 1 mit einem ersten Ausgangsanschluss 16 des Wechselrichters 9 verbunden. Zwischen dem ersten Ausgangsanschluss 16 und einem zweiten Ausgangsanschluss 17 des Wechselrichters 9, der mit dem Neutralanschluss 7 der Brückenschaltung 1 verbunden ist, ist ein Kondensator 15 angeordnet. Der Kondensator 15 und die Drossel 14 bilden zusammen ein Netzfilter 18 des Wechselrichters 9.

Bei dem dargestellten Wechselrichter 9 in Fig. 12 liegt am Neutralanschluss 7 der Brückenschaltung 1 ein sogenanntes Neutralpotential N vor und demgegenüber ein positives Potential DC+ am ersten Gleichspannungsanschluss 2 der Brückenschaltung 1 und ein negatives Potential DC- am zweiten Gleichspannungsanschluss 6 der Brückenschaltung 1.

Der Wechselrichter 9 in Fig. 12 ist im vorliegenden Beispiel als einphasiger Wechselrichter ausgeführt, welcher eine erfindungsgemäße Brückenschaltung 1 umfasst. Ein erfindungsgemäßer Wechselrichter kann aber als einphasiger Wechselrichter auch zwei erfindungsgemäße Brückenschaltungen 1 aufweisen, die versetzt angesteuert werden und deren erste Gleichspannungsanschlüsse 2 und zweite Gleichspannungsanschlüsse 6 verbunden sind. Ein erfindungsgemäßer Wechselrichter kann auch als dreiphasiger Wechselrichter ausgeführt sein, der dann mindestens drei erfindungsgemäße Brückenschaltungen 1 aufweist, die versetzt angesteuert werden und deren erste Gleichspannungsanschlüsse 2 und zweite Gleichspannungsanschlüsse 6 verbunden sind.

Die Erfindung ist nicht auf die explizit gezeigten Ausführungsformen beschränkt, sondern kann in vielfacher Art und Weise abgewandelt, insbesondere mit anderen gezeigten oder dem Fachmann bekannten Ausführungsformen kombiniert werden, jedoch im Rahmen der beigefügten Patentansprüche.

### Bezugszeichenliste

- 1: Brückenschaltung
- 2: Gleichspannungsanschluss
- 3: Zwischenpunkt
- 4: Wechselstromanschluss
- 5: Zwischenpunkt
- 6: Gleichspannungsanschluss
- 7: Neutralanschluss
- 8: Steuereinheit
- 9: Wechselrichter
- 10: Eingangsanschluss
- 11: Eingangsanschluss
- 12: Gleichspannungszwischenkreis
- 13: Mittelpunkt
- 14: Drossel
- 15: Kondensator
- 16: Ausgangsanschluss
- 17: Ausgangsanschluss
- 18: Netzfilter

- T1: Leistungshalbleiterschalter
- T2: Leistungshalbleiterschalter
- T3: Leistungshalbleiterschalter
- T4: Leistungshalbleiterschalter
- T5: Leistungshalbleiterschalter
- T6: Leistungshalbleiterschalter

- D1: Diode
- D2: Diode
- D3: Diode
- D4: Diode
- D5: Diode
- D6: Diode

- G1: Ansteuersignal
- G2: Ansteuersignal
- G3: Ansteuersignal
- G4: Ansteuersignal
- G5: Ansteuersignal
- G6: Ansteuersignal

- K-A: Konstellation
- K-B: Konstellation
- K-C: Konstellation
- K-D: Konstellation

- K-1: Konstellation
- K-2: Konstellation
- K-3: Konstellation
- K-4: Konstellation
- K-5: Konstellation
- K-6: Konstellation
- K-7: Konstellation
- K-8: Konstellation
- K-9: Konstellation
- K-10: Konstellation
- K-11: Konstellation

- K-O: Konstellation

- DC+: Potential
- DC-: Potential
- N: Potential

## Patentansprüche

1. Verfahren zum Ausschalten von Leistungshalbleiterschaltern einer Brückenschaltung (1), bei der ein erster Gleichspannungsanschluss (2) der Brückenschaltung (1) über einen ersten Leistungshalbleiterschalter (T1) mit einem ersten Zwischenpunkt (3), der erste Zwischenpunkt (3) über einen zweiten Leistungshalbleiterschalter (T2) mit einem Wechselstromanschluss (4) der Brückenschaltung (1), der Wechselstromanschluss (4) über einen dritten Leistungshalbleiterschalter (T3) mit einem zweiten Zwischenpunkt (5) und der zweite Zwischenpunkt (5) über einen vierten Leistungshalbleiterschalter (T4) mit einem zweiten Gleichspannungsanschluss (6) der Brückenschaltung (1) verbunden ist und bei der ein Neutralanschluss (7) der Brückenschaltung (1) über einen fünften Leistungshalbleiterschalter (T5) mit dem ersten Zwischenpunkt (3) und über einen sechsten Leistungshalbleiterschalter (T6) mit dem zweiten Zwischenpunkt (5) verbunden ist,
wobei das Verfahren einen Abschaltvorgang umfasst, bei dem eine Konstellation (K-O) hergestellt wird, in der alle Leistungshalbleiterschalter (T1 - T6) der Brückenschaltung (1) sich in einem ausgeschalteten Zustand befinden, **dadurch gekennzeichnet, dass** im Verlauf des Abschaltvorgangs gezielt eine Konstellation (K-3, K-5, K-9) hergestellt wird, in der der fünfte Leistungshalbleiterschalter (T5) und der sechste Leistungshalbleiterschalter (T6) sich gleichzeitig in einem eingeschalteten Zustand befinden, während der erste Leistungshalbleiterschalter (T1) und der vierte Leistungshalbleiterschalter (T4) sich in einem ausgeschalteten Zustand befinden, wobei ausgehend von einer zu Beginn des Abschaltvorgangs vorliegenden Konstellation (K-A, K-B), in der der erste Leistungshalbleiterschalter (T1), der sechste Leistungshalbleiterschalter (T6) und entweder der zweite Leistungshalbleiterschalter (T2) oder der dritte Leistungshalbleiterschalter (T3) sich in einem eingeschalteten Zustand und alle anderen Leistungshalbleiterschalter (T2, T3, T4, T5) sich in einem ausgeschalteten Zustand befinden, im Verlauf des Abschaltvorgangs der fünfte Leistungshalbleiterschalter (T5) in einen eingeschalteten Zustand überführt wird, nachdem im Verlauf des Abschaltvorgangs der erste Leistungshalbleiterschalter (T1) in einen ausgeschalteten Zustand überführt wurde.

2. Verfahren nach Anspruch 1, wobei im Verlauf des Abschaltvorgangs der erste Leistungshalbleiterschalter (T1) in einen ausgeschalteten Zustand überführt wird, nachdem im Verlauf des Abschaltvorgangs der zweite Leistungshalbleiterschalter (T2) oder der dritte Leistungshalbleiterschalter (T3) in einen ausgeschalteten Zustand überführt wurde.

3. Verfahren nach Anspruch 1, wobei im Verlauf des Abschaltvorgangs der zweite Leistungshalbleiterschalter (T2) oder der dritte Leistungshalbleiterschalter (T3) in einen ausgeschalteten Zustand überführt wird, nachdem im Verlauf des Abschaltvorgangs der erste Leistungshalbleiterschalter (T1) in einen ausgeschalteten Zustand überführt wurde.

4. Verfahren nach Anspruch 1, wobei im Verlauf des Abschaltvorgangs der zweite Leistungshalbleiterschalter (T2) oder der dritte Leistungshalbleiterschalter (T3) und der erste Leistungshalbleiterschalter (T1) gleichzeitig zur Überführung in einen ausgeschalteten Zustand angesteuert werden.

5. Verfahren nach Anspruch 1, wobei im Verlauf des Abschaltvorgangs der zweite Leistungshalbleiterschalter (T2) oder der dritte Leistungshalbleiterschalter (T3) in einen ausgeschalteten Zustand überführt wird, nachdem im Verlauf des Abschaltvorgangs der fünfte Leistungshalbleiterschalter (T5) in einen eingeschalteten Zustand überführt wurde.

6. Verfahren zum Ausschalten von Leistungshalbleiterschaltern einer Brückenschaltung (1), bei der ein erster Gleichspannungsanschluss (2) der Brückenschaltung (1) über einen ersten Leistungshalbleiterschalter (T1) mit einem ersten Zwischenpunkt (3), der erste Zwischenpunkt (3) über einen zweiten Leistungshalbleiterschalter (T2) mit einem Wechselstromanschluss (4) der Brückenschaltung (1), der Wechselstromanschluss (4) über einen dritten Leistungshalbleiterschalter (T3) mit einem zweiten Zwischenpunkt (5) und der zweite Zwischenpunkt (5) über einen vierten Leistungshalbleiterschalter (T4) mit einem zweiten Gleichspannungsanschluss (6) der Brückenschaltung (1) verbunden ist und bei der ein Neutralanschluss (7) der Brückenschaltung (1) über einen fünften Leistungshalbleiterschalter (T5) mit dem ersten Zwischenpunkt (3) und über einen sechsten Leistungshalbleiterschalter (T6) mit dem zweiten Zwischenpunkt (5) verbunden ist,
wobei das Verfahren einen Abschaltvorgang umfasst, bei dem eine Konstellation (K-O) hergestellt wird, in der alle Leistungshalbleiterschalter (T1 - T6) der Brückenschaltung (1) sich in einem ausgeschalteten Zustand befinden, **dadurch gekennzeichnet, dass** im Verlauf des Abschaltvorgangs gezielt eine Konstellation (K-3, K-5, K-9) hergestellt wird, in der der fünfte Leistungshalbleiterschalter (T5) und der sechste Leistungshalbleiterschalter (T6) sich gleichzeitig in einem eingeschalteten Zustand befinden, während der erste Leistungshalbleiterschalter (T1) und der vierte Leistungshalbleiterschalter (T4) sich in einem ausgeschalteten Zustand befinden, wobei ausgehend von einer zu Beginn des Abschaltvorgangs vorliegenden Konstellation (K-C, K-D), in der der vierte Leistungshalbleiterschalter (T4), der fünfte Leistungshalbleiterschalter (T5) und entweder der zweite Leistungshalbleiterschalter (T2) oder der dritte Leistungshalbleiterschalter (T3) sich in einem eingeschalteten Zustand und alle anderen Leistungshalbleiterschalter (T1, T2, T3, T6) sich in einem ausgeschalteten Zustand befinden, im Verlauf des Abschaltvorgangs der sechste Leistungshalbleiterschalter (T6) in einen eingeschalteten Zustand überführt wird, nachdem im Verlauf des Abschaltvorgangs der vierte Leistungshalbleiterschalter (T4) in einen ausgeschalteten Zustand überführt wurde.

7. Verfahren nach Anspruch 6, wobei im Verlauf des Abschaltvorgangs der vierte Leistungshalbleiterschalter (T4) in einen ausgeschalteten Zustand überführt wird, nachdem im Verlauf des Abschaltvorgangs der zweite Leistungshalbleiterschalter (T2) oder der dritte Leistungshalbleiterschalter (T3) in einen ausgeschalteten Zustand überführt wurde.

8. Verfahren nach Anspruch 6, wobei im Verlauf des Abschaltvorgangs der zweite Leistungshalbleiterschalter (T2) oder der dritte Leistungshalbleiterschalter (T3) in einen ausgeschalteten Zustand überführt wird, nachdem im Verlauf des Abschaltvorgangs der vierte Leistungshalbleiterschalter (T4) in einen ausgeschalteten Zustand überführt wurde.

9. Verfahren nach Anspruch 6, wobei im Verlauf des Abschaltvorgangs der zweite Leistungshalbleiterschalter (T2) oder der dritte Leistungshalbleiterschalter (T3) und der vierte Leistungshalbleiterschalter (T4) gleichzeitig zur Überführung in einen ausgeschalteten Zustand angesteuert werden.

10. Verfahren nach Anspruch 6, wobei im Verlauf des Abschaltvorgangs der zweite Leistungshalbleiterschalter (T2) oder der dritte Leistungshalbleiterschalter (T3) in einen ausgeschalteten Zustand überführt wird, nachdem im Verlauf des Abschaltvorgangs der sechste Leistungshalbleiterschalter (T6) in einen eingeschalteten Zustand überführt wurde.

11. Verfahren nach einem der vorhergehenden Ansprüche, wobei im Verlauf des Abschaltvorgangs der fünfte Leistungshalbleiterschalter (T5) und der sechste Leistungshalbleiterschalter (T6) in einen ausgeschalteten Zustand überführt werden, nachdem im Verlauf des Abschaltvorgangs eine Konstellation hergestellt wurde, in der der fünfte Leistungshalbleiterschalter (T5) und der sechste Leistungshalbleiterschalter (T6) sich in einem eingeschalteten Zustand und alle anderen Leistungshalbleiterschalter (T1, T2, T3, T4) sich in einem ausgeschalteten Zustand befinden.

12. Verfahren nach Anspruch 11, wobei ein gegenüber einem Potential am Neutralanschluss (7) positives Potential am ersten Gleichspannungsanschluss (2) und ein gegenüber dem Potential am Neutralanschluss (7) negatives Potential am zweiten Gleichspannungsanschluss (6) anliegt, und wobei im Verlauf des Abschaltvorgangs nach Herstellen der Konstellation, in der der fünfte Leistungshalbleiterschalter (T5) und der sechste Leistungshalbleiterschalter (T6) sich in einem eingeschalteten Zustand und alle anderen Leistungshalbleiterschalter (T1, T2, T3, T4) sich in einem ausgeschalteten Zustand befinden, ausgehend von dieser Konstellation der dritte Leistungshalbleiterschalter (T3) in einen eingeschalteten Zustand überführt wird, wenn ein positiver Strom am Wechselstromanschluss (4) vorliegt, und der zweite Leistungshalbleiterschalter (T2) in einen eingeschalteten Zustand überführt wird, wenn ein negativer Strom am Wechselstromanschluss (4) vorliegt, und wobei der dritte Leistungshalbleiterschalter (T3) bzw. der zweite Leistungshalbleiterschalter (T2) wieder in einen ausgeschalteten Zustand überführt wird, nachdem zuvor im Verlauf des Abschaltvorgangs der fünfte Leistungshalbleiterschalter (T5) und der sechste Leistungshalbleiterschalter (T6) in einen ausgeschalteten Zustand überführt wurden, wobei optional im Verlauf des Abschaltvorgangs der dritte Leistungshalbleiterschalter (T3) bzw. der zweite Leistungshalbleiterschalter (T2) in einen ausgeschalteten Zustand überführt wird, nachdem seit einem Zeitpunkt, zu dem der fünfte Leistungshalbleiterschalter (T5) und der sechste Leistungshalbleiterschalter (T6) in einen ausgeschalteten Zustand überführt wurden, eine vorgebbare Zeit vergangen ist und/oder ein Nulldurchgang des Stromes am Wechselstromanschluss (4) stattgefunden hat.

13. Brückenschaltung (1) aufweisend einen ersten Leistungshalbleiterschalter (T1), einen zweiten Leistungshalbleiterschalter (T2), einen dritten Leistungshalbleiterschalter (T3), einen vierten Leistungshalbleiterschalter (T4), einen fünften Leistungshalbleiterschalter (T5) und einen sechsten Leistungshalbleiterschalter (T6), wobei ein erster Gleichspannungsanschluss (2) der Brückenschaltung (1) über den ersten Leistungshalbleiterschalter (T1) mit einem ersten Zwischenpunkt (3), der erste Zwischenpunkt (3) über den zweiten Leistungshalbleiterschalter (T2) mit einem Wechselstromanschluss (4) der Brückenschaltung (1), der Wechselstromanschluss (4) über den dritten Leistungshalbleiterschalter (T3) mit einem zweiten Zwischenpunkt (5) und der zweite Zwischenpunkt (5) über den vierten Leistungshalbleiterschalter (T4) mit einem zweiten Gleichspannungsanschluss (6) der Brückenschaltung (1) verbunden ist und weiterhin ein Neutralanschluss (7) der Brückenschaltung (1) über den fünften Leistungshalbleiterschalter (T5) mit dem ersten Zwischenpunkt (3) und über den sechsten Leistungshalbleiterschalter (T6) mit dem zweiten Zwischenpunkt (5) verbunden ist, sowie ferner aufweisend eine Steuereinheit (8) zum Ansteuern der Leistungshalbleiterschalter (T1 - T6) der Brückenschaltung (1) zur Überführung von einem ausgeschalteten Zustand in einen eingeschalteten Zustand und umgekehrt, **dadurch gekennzeichnet, dass** die Steuereinheit (8) zur Ausführung eines Verfahrens nach einem der Ansprüche 1 - 12 eingerichtet ist.

14. Brückenschaltung (1) nach Anspruch 13, wobei der zweite Leistungshalbleiterschalter (T2) und der dritte Leistungshalbleiterschalter (T3) als Feldeffekttransistoren und die anderen Leistungshalbleiterschalter (T1, T4, T5, T6) als Bipolartransistoren ausgeführt sind.

15. Wechselrichter (9) umfassend mindestens eine Brückenschaltung (1) nach Anspruch 13 oder 14.

## Claims

1. A method for switching off power semiconductor switches in a bridge circuit (1), in which a first DC voltage connection (2) of the bridge circuit (1) is connected to a first intermediate point (3) via a first power semiconductor switch (T1), the first intermediate point (3) is connected to an AC connection (4) of the bridge circuit (1) via a second power semiconductor switch (T2), the AC connection (4) is connected to a second intermediate point (5) via a third power semiconductor switch (T3) and the second intermediate point (5) is connected to a second DC voltage connection (6) of the bridge circuit (1) via a fourth power semiconductor switch (T4), and in which a neutral connection (7) of the bridge circuit (1) is connected to the first intermediate point (3) via a fifth power semiconductor switch (T5) and is connected to the second intermediate point (5) via a sixth power semiconductor switch (T6),
wherein the method comprises a switch-off process in which a configuration (K-O) is established in which all power semiconductor switches (T1-T6) in the bridge circuit (1) are in a switched-off state, **characterized in that**, over the course of the switch-off process, a configuration (K-3, K-5, K-9) is deliberately established in which the fifth power semiconductor switch (T5) and the sixth power semiconductor switch (T6) are simultaneously in a switched-on state, while the first power semiconductor switch (T1) and the fourth power semiconductor switch (T4) are in a switched-off state, wherein, starting from a configuration (K-A, K-B) that is present at the start of the switch-off process and in which the first power semiconductor switch (T1), the sixth power semiconductor switch (T6) and either the second power semiconductor switch (T2) or the third power semiconductor switch (T3) are in a switched-on state and all other power semiconductor switches (T2, T3, T4, T5) are in a switched-off state, the fifth power semiconductor switch (T5) is transferred to a switched-on state over the course of the switch-off process after the first power semiconductor switch (T1) has been transferred to a switched-off state over the course of the switch-off process.

2. The method as claimed in claim 1, wherein the first power semiconductor switch (T1) is transferred to a switched-off state over the course of the switch-off process after the second power semiconductor switch (T2) or the third power semiconductor switch (T3) has been transferred to a switched-off state over the course of the switch-off process.

3. The method as claimed in claim 1, wherein the second power semiconductor switch (T2) or the third power semiconductor switch (T3) is transferred to a switched-off state over the course of the switch-off process after the first power semiconductor switch (T1) has been transferred to a switched-off state over the course of the switch-off process.

4. The method as claimed in claim 1, wherein the second power semiconductor switch (T2) or the third power semiconductor switch (T3) and the first power semiconductor switch (T1) are simultaneously controlled to be transferred to a switched-off state over the course of the switch-off process.

5. The method as claimed in claim 1, wherein the second power semiconductor switch (T2) or the third power semiconductor switch (T3) is transferred to a switched-off state over the course of the switch-off process after the fifth power semiconductor switch (T5) has been transferred to a switched-on state over the course of the switch-off process.

6. A method for switching off power semiconductor switches in a bridge circuit (1), in which a first DC voltage connection (2) of the bridge circuit (1) is connected to a first intermediate point (3) via a first power semiconductor switch (T1), the first intermediate point (3) is connected to an AC connection (4) of the bridge circuit (1) via a second power semiconductor switch (T2), the AC connection (4) is connected to a second intermediate point (5) via a third power semiconductor switch (T3) and the second intermediate point (5) is connected to a second DC voltage connection (6) of the bridge circuit (1) via a fourth power semiconductor switch (T4), and in which a neutral connection (7) of the bridge circuit (1) is connected to the first intermediate point (3) via a fifth power semiconductor switch (T5) and is connected to the second intermediate point (5) via a sixth power semiconductor switch (T6),
wherein the method comprises a switch-off process in which a configuration (K-O) is established in which all power semiconductor switches (T1-T6) in the bridge circuit (1) are in a switched-off state, **characterized in that**, over the course of the switch-off process, a configuration (K-3, K-5, K-9) is deliberately established in which the fifth power semiconductor switch (T5) and the sixth power semiconductor switch (T6) are simultaneously in a switched-on state, while the first power semiconductor switch (T1) and the fourth power semiconductor switch (T4) are in a switched-off state, wherein, starting from a configuration (K-C, K-D) that is present at the start of the switch-off process and in which the fourth power semiconductor switch (T4), the fifth power semiconductor switch (T5) and either the second power semiconductor switch (T2) or the third power semiconductor switch (T3) are in a switched-on state and all other power semiconductor switches (T1, T2, T3, T6) are in a switched-off state, the sixth power semiconductor switch (T6) is transferred to a switched-on state over the course of the switch-off process after the fourth power semiconductor switch (T4) has been transferred to a switched-off state over the course of the switch-off process.

7. The method as claimed in claim 6, wherein the fourth power semiconductor switch (T4) is transferred to a switched-off state over the course of the switch-off process after the second power semiconductor switch (T2) or the third power semiconductor switch (T3) has been transferred to a switched-off state over the course of the switch-off process.

8. The method as claimed in claim 6, wherein the second power semiconductor switch (T2) or the third power semiconductor switch (T3) is transferred to a switched-off state over the course of the switch-off process after the fourth power semiconductor switch (T4) has been transferred to a switched-off state over the course of the switch-off process.

9. The method as claimed in claim 6, wherein the second power semiconductor switch (T2) or the third power semiconductor switch (T3) and the fourth power semiconductor switch (T4) are simultaneously controlled to be transferred to a switched-off state over the course of the switch-off process.

10. The method as claimed in claim 6, wherein the second power semiconductor switch (T2) or the third power semiconductor switch (T3) is transferred to a switched-off state over the course of the switch-off process after the sixth power semiconductor switch (T6) has been transferred to a switched-on state over the course of the switch-off process.

11. The method as claimed in one of the preceding claims, wherein the fifth power semiconductor switch (T5) and the sixth power semiconductor switch (T6) are transferred to a switched-off state over the course of the switch-off process after a configuration, in which the fifth power semiconductor switch (T5) and the sixth power semiconductor switch (T6) are in a switched-on state and all other power semiconductor switches (T1, T2, T3, T4) are in a switched-off state, has been established over the course of the switch-off process.

12. The method as claimed in claim 11, wherein a potential that is positive with respect to a potential at the neutral connection (7) is applied to the first DC voltage connection (2) and a potential that is negative with respect to the potential at the neutral connection (7) is applied to the second DC voltage connection (6), and wherein, after the configuration, in which the fifth power semiconductor switch (T5) and the sixth power semiconductor switch (T6) are in a switched-on state and all other power semiconductor switches (T1, T2, T3, T4) are in a switched-off state, has been established over the course of the switch-off process, starting from this configuration, the third power semiconductor switch (T3) is transferred to a switched-on state if a positive current is present at the AC connection (4), and the second power semiconductor switch (T2) is transferred to a switched-on state if a negative current is present at the AC connection (4), and wherein the third power semiconductor switch (T3) or the second power semiconductor switch (T2), respectively, is transferred to a switched-off state again after the fifth power semiconductor switch (T5) and the sixth power semiconductor switch (T6) have been transferred to a switched-off state before this over the course of the switch-off process, wherein optionally the third power semiconductor switch (T3) or the second power semiconductor switch (T2), respectively, is transferred to a switched-off state over the course of the switch-off process after a predefinable time has elapsed since a point in time at which the fifth power semiconductor switch (T5) and the sixth power semiconductor switch (T6) were transferred to a switched-off state and/or a zero crossing of the current at the AC connection (4) has occurred.

13. A bridge circuit (1) having a first power semiconductor switch (T1), a second power semiconductor switch (T2), a third power semiconductor switch (T3), a fourth power semiconductor switch (T4), a fifth power semiconductor switch (T5) and a sixth power semiconductor switch (T6), wherein a first DC voltage connection (2) of the bridge circuit (1) is connected to a first intermediate point (3) via the first power semiconductor switch (T1), the first intermediate point (3) is connected to an AC connection (4) of the bridge circuit (1) via the second power semiconductor switch (T2), the AC connection (4) is connected to a second intermediate point (5) via the third power semiconductor switch (T3) and the second intermediate point (5) is connected to a second DC voltage connection (6) of the bridge circuit (1) via the fourth power semiconductor switch (T4) and furthermore a neutral connection (7) of the bridge circuit (1) is connected to the first intermediate point (3) via the fifth power semiconductor switch (T5) and is connected to the second intermediate point (5) via the sixth power semiconductor switch (T6), and further comprising a control unit (8) for controlling the power semiconductor switches (T1-T6) in the bridge circuit (1) to be transferred from a switched-off state to a switched-on state and vice versa, **characterized in that** the control unit (8) is configured to carry out a method as claimed in one of claims 1-12.

14. The bridge circuit (1) as claimed in claim 13, wherein the second power semiconductor switch (T2) and the third power semiconductor switch (T3) are embodied as field effect transistors and the other power semiconductor switches (T1, T4, T5, T6) are embodied as bipolar transistors.

15. An inverter (9) comprising at least one bridge circuit (1) as claimed in claim 13 or 14.

## Revendications

1. Procédé de coupure de commutateurs à semi-conducteurs de puissance d'un circuit en pont (1), dans lequel une première borne de tension continue (2) du circuit en pont (1) est reliée par un premier commutateur à semi-conducteurs de puissance (T1) à un premier point intermédiaire (3), le premier point intermédiaire (3) est relié par un deuxième commutateur à semi-conducteurs de puissance (T2) à une borne de courant alternatif (4) du circuit en pont (1), la borne de courant alternatif (4) est reliée à un deuxième point intermédiaire (5) par un troisième commutateur semi-conducteur de puissance (T3) et le deuxième point intermédiaire (5) est relié à une deuxième borne de tension continue (6) du circuit en pont par un quatrième commutateur semi-conducteur de puissance (T4) à une deuxième borne de tension continue (6) du circuit en pont (1) et dans lequel une borne neutre (7) du circuit en pont (1) est reliée au premier point intermédiaire (3) par l'intermédiaire d'un cinquième commutateur à semi-conducteur de puissance (T5) et au deuxième point intermédiaire (5) par l'intermédiaire d'un sixième commutateur à semi-conducteur de puissance (T6), le procédé comprenant un processus de coupure dans lequel on établit une constellation (K O) dans laquelle tous les commutateurs à semi-conducteurs de puissance (T1 - T6) du circuit en pont (1) se trouvent dans un état coupé, **caractérisé en ce que**, au cours du processus de coupure, on établit de manière ciblée une constellation (K-3, K-5, K-9) dans laquelle le cinquième commutateur à semi-conducteur de puissance (T5) et le sixième commutateur à semi-conducteur de puissance (T6) se trouvent simultanément dans un état fermé, tandis que le premier commutateur à semi-conducteur de puissance (T1) et le quatrième commutateur à semi-conducteur de puissance (T4) se trouvent dans un état coupé, dans lequel, en partant d'une constellation (K-A, K-B) présente au début du processus de coupure, dans laquelle le premier commutateur à semi-conducteur de puissance (T1), le sixième commutateur à semi-conducteur de puissance (T6) et soit le deuxième commutateur à semi-conducteur de puissance (T2) soit le troisième commutateur à semi-conducteur de puissance (T3) se trouvent dans un état fermé et tous les autres commutateurs à semi-conducteur de puissance (T2, T3, T4, T5) se trouvent dans un état coupé, au cours du processus de coupure, le cinquième commutateur à semi-conducteur de puissance (T5) est amené dans un état fermé après que le premier commutateur à semi-conducteur de puissance (T1) a été amené dans un état coupé au cours du processus de coupure.

2. Procédé selon la revendication 1, dans lequel, au cours du processus de coupure, le premier commutateur à semi-conducteur de puissance (T1) est amené dans un état coupé après que, au cours du processus de coupure, le deuxième commutateur à semi-conducteur de puissance (T2) ou le troisième commutateur à semi-conducteur de puissance (T3) a été amené dans un état coupé.

3. Procédé selon la revendication 1, dans lequel, au cours du processus de coupure, le deuxième commutateur à semi-conducteur de puissance (T2) ou le troisième commutateur à semi-conducteur de puissance (T3) est amené dans un état coupé après que, au cours du processus de coupure, le premier commutateur à semi-conducteur de puissance (T1) a été amené dans un état coupé.

4. Procédé selon la revendication 1, dans lequel, au cours du processus de coupure, le deuxième commutateur à semi-conducteur de puissance (T2) ou le troisième commutateur à semi-conducteur de puissance (T3) et le premier commutateur à semi-conducteur de puissance (T1) sont commandés simultanément pour passer à un état coupé.

5. Procédé selon la revendication 1, dans lequel, au cours du processus de coupure, le deuxième commutateur à semi-conducteur de puissance (T2) ou le troisième commutateur à semi-conducteur de puissance (T3) est amené dans un état coupé après que le cinquième commutateur à semi-conducteur de puissance (T5) a été amené dans un état fermé au cours du processus de coupure.

6. Procédé de coupure de commutateurs à semi-conducteurs de puissance d'un circuit en pont (1), dans lequel une première borne de tension continue (2) du circuit en pont (1) est reliée par un premier commutateur à semi-conducteurs de puissance (T1) à un premier point intermédiaire (3), le premier point intermédiaire (3) est relié par un deuxième commutateur à semi-conducteurs de puissance (T2) à une borne de courant alternatif (4) du circuit en pont (1), la borne de courant alternatif (4) est reliée à un deuxième point intermédiaire (5) par un troisième commutateur semi-conducteur de puissance (T3) et le deuxième point intermédiaire (5) est relié à une deuxième borne de tension continue (6) du circuit en pont par un quatrième commutateur semi-conducteur de puissance (T4) à une deuxième borne de tension continue (6) du circuit en pont (1) et dans lequel une borne neutre (7) du circuit en pont (1) est reliée au premier point intermédiaire (3) par l'intermédiaire d'un cinquième commutateur à semi-conducteur de puissance (T5) et au deuxième point intermédiaire (5) par l'intermédiaire d'un sixième commutateur à semi-conducteur de puissance (T6),
le procédé comprenant un processus de coupure dans lequel on établit une constellation (K O) dans laquelle tous les commutateurs à semi-conducteurs de puissance (T1 - T6) du circuit en pont (1) se trouvent dans un état coupé, **caractérisé en ce que**, au cours du processus de coupure, on établit de manière ciblée une constellation (K-3, K-5, K-9) dans laquelle le cinquième commutateur à semi-conducteur de puissance (T5) et le sixième commutateur à semi-conducteur de puissance (T6) se trouvent simultanément dans un état fermé, tandis que le premier commutateur à semi-conducteur de puissance (T1) et le quatrième commutateur à semi-conducteur de puissance (T4) se trouvent dans un état coupé, dans lequel, en partant d'une constellation (K-C, K-D) présente au début du processus de coupure, dans laquelle le quatrième commutateur à semi-conducteur de puissance (T4), le cinquième commutateur à semi-conducteur de puissance (T5) et soit le deuxième commutateur à semi-conducteur de puissance (T2) soit le troisième commutateur à semi-conducteur de puissance (T3) se trouvent dans un état fermé et tous les autres commutateurs à semi-conducteur de puissance (T1, T2, T3, T6) sont dans un état coupé, au cours du processus de coupure, le sixième commutateur à semi-conducteur de puissance (T6) est amené dans un état fermé après que le quatrième commutateur à semi-conducteur de puissance (T4) a été amené dans un état coupé au cours du processus de coupure.

7. Procédé selon la revendication 6, dans lequel, au cours du processus de coupure, le quatrième commutateur à semi-conducteur de puissance (T4) est amené dans un état coupé après que, au cours du processus de coupure, le deuxième commutateur à semi-conducteur de puissance (T2) ou le troisième commutateur à semi-conducteur de puissance (T3) a été amené dans un état coupé.

8. Procédé selon la revendication 6, dans lequel, au cours du processus de coupure, le deuxième commutateur à semi-conducteur de puissance (T2) ou le troisième commutateur à semi-conducteur de puissance (T3) est amené dans un état coupé après que, au cours du processus de coupure, le quatrième commutateur à semi-conducteur de puissance (T4) a été amené dans un état coupé.

9. Procédé selon la revendication 6, dans lequel, au cours du processus de coupure, le deuxième commutateur à semi-conducteur de puissance (T2) ou le troisième commutateur à semi-conducteur de puissance (T3) et le quatrième commutateur à semi-conducteur de puissance (T4) sont commandés simultanément pour passer à un état coupé.

10. Procédé selon la revendication 6, dans lequel, au cours du processus de coupure, le deuxième commutateur à semi-conducteur de puissance (T2) ou le troisième commutateur à semi-conducteur de puissance (T3) est amené dans un état coupé après que le sixième commutateur à semi-conducteur de puissance (T6) a été amené dans un état fermé au cours du processus de coupure.

11. Procédé selon l'une quelconque des revendications précédentes, dans lequel, au cours du processus de coupure, le cinquième commutateur à semi-conducteur de puissance (T5) et le sixième commutateur à semi-conducteur de puissance (T6) sont amenés dans un état coupé après qu'une constellation a été établie au cours du processus de coupure, dans laquelle le cinquième commutateur à semi-conducteur de puissance (T5) et le sixième commutateur à semi-conducteur de puissance (T6) se trouvent dans un état fermé et tous les autres commutateurs à semi-conducteur de puissance (T1, T2, T3, T4) se trouvent dans un état coupé.

12. Procédé selon la revendication 11, dans lequel un potentiel positif par rapport à un potentiel à la borne neutre (7) est appliqué à la première borne de tension continue (2) et un potentiel négatif par rapport au potentiel à la borne neutre (7) est appliqué à la deuxième borne de tension continue (6), et dans lequel, au cours du processus de coupure après l'établissement de la constellation dans laquelle le cinquième commutateur à semi-conducteur de puissance (T5) et le sixième commutateur à semi-conducteur de puissance (T6) se trouvent dans un état fermé et tous les autres commutateurs à semi-conducteur de puissance (T1, T2, T3, T4) se trouvent dans un état coupé, en partant de cette constellation, le troisième commutateur à semi-conducteur de puissance (T3) est amené dans un état fermé lorsqu'un courant positif est présent à la borne de courant alternatif (4), et le deuxième commutateur à semi-conducteur de puissance (T2) est amené dans un état fermé lorsqu'un courant négatif est présent à la borne de courant alternatif (4), et dans lequel le troisième commutateur à semi-conducteur de puissance (T3) ou le deuxième commutateur à semi-conducteur de puissance (T2) est à nouveau amené dans un état coupé après que le cinquième commutateur à semi-conducteur de puissance (T5) et le sixième commutateur à semi-conducteur de puissance (T6) ont été amené dans un état coupé au cours du processus de coupure, dans lequel, en option, au cours du processus de coupure, le troisième commutateur à semi-conducteur de puissance (T3) ou le deuxième commutateur à semi-conducteur de puissance (T2) est amené dans un état coupé après qu'un temps prédéterminable s'est écoulé depuis un moment auquel le cinquième commutateur à semi-conducteur de puissance (T5) et le sixième commutateur à semi-conducteur de puissance (T6) ont été amenés dans un état coupé et/ou qu'un passage par zéro du courant a eu lieu au niveau de la borne de courant alternatif (4).

13. Circuit en pont (1) comprenant un premier commutateur à semi-conducteur de puissance (T1), un deuxième commutateur à semi-conducteur de puissance (T2), un troisième commutateur à semi-conducteur de puissance (T3), un quatrième commutateur à semi-conducteur de puissance (T4), un cinquième commutateur à semi-conducteur de puissance (T5) et un sixième commutateur à semi-conducteur de puissance (T6), dans lequel une première borne de tension continue (2) du circuit en pont (1) est reliée à un premier point intermédiaire (3) par l'intermédiaire du premier commutateur à semi-conducteur de puissance (T1), le premier point intermédiaire (3) est relié à une borne de courant alternatif (4) du circuit en pont (1) par l'intermédiaire du deuxième commutateur à semi-conducteur de puissance (T2), la borne de courant alternatif (4) est reliée à un deuxième point intermédiaire (5) par l'intermédiaire du troisième commutateur à semi-conducteur de puissance (T3) et le deuxième point intermédiaire (5) est relié à une deuxième borne de tension continue (6) du circuit en pont (1) par l'intermédiaire du quatrième commutateur à semi-conducteur de puissance (T4) et en outre une borne neutre (7) du circuit en pont (1) est reliée au premier point intermédiaire (3) par l'intermédiaire du cinquième commutateur à semi-conducteur de puissance (T5) et au deuxième point intermédiaire (5) par l'intermédiaire du sixième commutateur à semi-conducteur de puissance (T6), et comprenant en outre une unité de commande (8) pour commander les commutateurs à semi-conducteurs de puissance (T1 - T6) du circuit en pont (1) pour passer d'un état coupé à un état fermé et inversement, **caractérisé en ce que** l'unité de commande (8) est agencée pour exécuter un procédé selon l'une des revendications 1 à 12.

14. Circuit en pont (1) selon la revendication 13, dans lequel le deuxième commutateur à semi-conducteur de puissance (T2) et le troisième commutateur à semi-conducteur de puissance (T3) sont des transistors à effet de champ et les autres commutateurs semi-conducteurs de puissance (T1, T4, T5, T6) sont des transistors bipolaires.

15. Onduleur (9) comprenant au moins un circuit en pont (1) selon la revendication 13 ou 14.
